Europäisches Patentamt

European Patent Office

Office européen des brevets

(11) Publication number: **0 176 098 B1**

# EUROPEAN PATENT SPECIFICATION

(45) Date of publication of patent specification: **03.04.91**　(51) Int. Cl.5: **H04L 5/14**, H04L 5/16

(21) Application number: **85112194.7**

(22) Date of filing: **26.09.85**

(54) Digital transmission system.

(30) Priority: 26.09.84 JP 201021/84
28.12.84 JP 276354/84
28.03.85 JP 64371/85

(43) Date of publication of application:
02.04.86 Bulletin 86/14

(45) Publication of the grant of the patent:
03.04.91 Bulletin 91/14

(84) Designated Contracting States:
DE FR GB IT SE

(56) References cited:
EP-A- 0 156 348
GB-A- 1 401 436
US-A- 3 967 058

IEEE INTERNATIONAL CONFERENCE ON
COMMUNICATIONS, Philadelphia, 13th-17th
June 1982, Conference Record, vol. 3, pages
7G.2.1-7G.2.5, IEEE, New York, US; A. BROSIO
et al.: "Design aspects and test results of
digital subscriber loop transmission sys-
tems"

IEEE INTERNATIONAL CONFERENCE ON
COMMUNICATIONS 1985, Chicago, 23th-26th
June 1985, Conference Record, vol. 3, pages

1487-1491, IEEE, New York, US; A. BROSIO et
al.: "Echo canceler burst mode: a new tech-
nique for digital transmission on subscriber
lines"

PATENT ABSTRACTS OF JAPAN, vol. 9, no.
110 (E-314)[1833], 15th May 1985; & JP-A-60
1947 (NIPPON DENKI K.K.) 08-01-1985

(73) Proprietor: FUJITSU LIMITED
1015, Kamikodanaka Nakahara-ku
Kawasaki-shi Kanagawa 211(JP)

(72) Inventor: Fukua, Misao
20-14, Igusa 1-chome Suginami-ku
Tokyo 167(JP)
Inventor: Tsuda, Toshitaka
3-403, Minaminomachi 515-1, Shinano-cho
Totsuda-ku Yokohama-shi Kanagawa 244(JP)
Inventor: Murano, Kazuo
1409, Jingumaekoporasu 25-8, Jingumae
6-chome
Shibuya-ku Tokyo 150(JP)

(74) Representative: Lehn, Werner, Dipl.-Ing. et al
Hoffmann, Eitle & Partner Patentanwälte Ar-
abellastrasse 4
W-8000 München 81(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a digital transmission system operated under a full duplex communication mode, comprising: a single transmission line; at least one slave transmitting-receiving (T/R) unit including a hybrid circuit connected to said single transmission line, for transmitting signals to said single transmission line and at the same time for receiving signals from said transmission line; a timing control means; a first transmission control means; and a master transmitting-receiving unit including a hybrid circuit connected to said single transmission line, for transmitting signals to said single transmission line and at the same time for receiving signals from said transmission line; a second transmission control means; and a master clock source for driving said master unit.

Such a transmission system is known from US-A-3 967 058. The invention is applicable to a digital transmission system employed, for example, in an integrated service digital network (ISDM) for transmitting data via a single transmission line under a full duplex communication mode.

In a known digital transmission system operated under the full duplex communication mode, a highly accurate timing recovery operation must be achieved to maintain a good quality transmission data, and echo must be completely suppressed for the same reason. The above-mentioned second requirement is especially pertinent to a digital transmission system operated under an echo cancellation method, but is not so important in a digital transmission system operated under a time compression method, i.e. the so-called ping-pong method. This is because, in the ping-pong method, a send signal from a transmitter unit in a transmitting-receiving unit cannot inherently leak into a receiver unit in the same, as it can in the echo cancellation method.

Namely, in the above digital transmission system, interference in the timing recovery operation is usually caused by an echo signal originating from a send signal output by that system, and interference in the echo cancellation operation is usually caused by a signal received from a remote transmitting-receiving unit.

In the prior art transmitting-receiving unit, a measure for maintaining the high quality of transmission data is directed only to a reduction of the echo signal to a level as low as possible, to attain more accurate timing recovery. For example, the related echo cancellation circuit works under a certain algorithm to bring the echo signal to a level of almost zero at each sampling point. In this case, even though each sampled echo signal level is reduced to nearly zero, the remaining echo signals, which have not been sampled, are left as they are, i.e., at a relatively high level. The thus non-sampled echo signals often reach a level as high as the levels of the received signals. Under such circumstances, it is very difficult for the related timing recovery circuit to achieve a really accurate timing recovery operation, since the received signals used for that operation contain undesired non-sampled echo signal components.

Consequently, the problems occurring in the prior art are, first, a large number of the sampling points must be used, and second, the timing recovery circuit must be operated in accordance with a complicated algorithm. These above mentioned first and second measures are not suitable for practical and commercial use from an economical viewpoint.

## SUMMARY OF THE INVENTION

Accordingly, an object of the present invention is to provide a digital transmission system, operated under a full duplex communication mode and an echo cancellation method, in which a highly accurate timing recovery operation can be performed without employing special hardware or using a special algorithm. A further object of the present invention is to achieve a complete echo cancellation operation in the system without employing special hardware or using a special algorithm.

According to the invention, the digital transmission system initially defined is characterized in that each slave unit includes an echo canceller for cancelling an echo signal contained in the signal received from the associated hybrid circuit; the master unit includes an echo canceller for cancelling an echo signal contained in the signal received from the associated hybrid circuit, transmission by said second transmission control means being made in a manner such that a frame pulse, a timing pulse, send data, and a non-signal duration period are issued sequentially in order to set up each frame, and an adjustment is initiated, during the generation of said frame pulse and timing pulse to be transmitted to said single transmission line, of said echo canceller of the master transmitting- receiving unit; each slave T/R unit is driven by an internal clock and each timing control means is arranged to synchronise said internal clock with the received frame pulse and then to initiate timing recovery with the received timing pulse to reproduce the received send data; and each first transmission control means is arranged to inhibit transmission of a signal only during the reception of the frame pulse and the timing pulse from said master transmitting-receiving unit, to said single transmission line, and to initiate an adjustment, only during said non-signal duration period, of said echo canceller of each slave transmitting-receiving unit.

The above objects and features of the present invention will be more apparent from the following description of the preferred embodiments with reference to the accompanying drawings, wherein:

Fig. 1 is a general block diagram of a conventional digital transmission system to which the present invention pertains;

Figs. 2A, 2B, 2C, and 2D depict waveforms of signals for explaining the echo cancellation circuit;

Fig. 3 is a block diagram of a master side transmitting-receiving unit according to a first embodiment of the present invention;

Fig. 4 is a block diagram of a slave side transmitting-receiving unit according to a first embodiment of the present invention;

Figs. 5A, 5B, 5C, and 5D depict timing charts of signals appearing in the units shown in Figs. 3 and 4;

Fig. 6 illustrates a more detailed example of the synchronizing circuit and the timing recovery circuit in cooperation with the sequence controller shown in Fig. 4;

Figs. 7A through 7K depict waveforms appearing at the portions A through K shown in Fig. 6, respectively;

Fig. 8 is a block diagram of a master side transmitting-receiving unit according to a second embodiment of the present invention;

Fig. 9 is a block diagram of a slave side transmitting-receiving unit according to a second embodiment of the present invention;

Figs. 10A. 10B, 10C and 10D depict timing charts of signals appearing in the units shown in Figs. 8 and 9;

Fig. 11 is a general block diagram of a digital transmission system according to a modified first embodiment of the present invention;

Figs. 12A, 12B, 12C, and 12D depict waveforms of the signals for explaining the timing recovery performed in the master side transmitting-receiving unit;

Fig. 13 illustrates a more detailed example of the timing recovery circuit together with the phase extraction means at the master side transmitting-receiving unit shown in Fig. 11;

Figs. 14A, to 14I depict timing charts for explaining the operation of the circuit shown in Fig. 13;

Fig. 15 is a detailed example of the frame pulse gnerator;

Fig. 16 is a circuit diagram of a modified receiver part to be operated with the frame pulse FP only; and

Figs. 17A through 17F depict waveforms of signals appearing in Fig. 16 at the portions A through F, respectively.

## DESCRIPTION OF THE PREFERRED EMBODIMENTS

Before describing the embodiments of the present invention, the technical background thereof and problems therein will be first described with reference to the related figures. Further, for ease of comprehension, the following explanations will be primarily made on the basis of an integrated service digital network (ISDN).

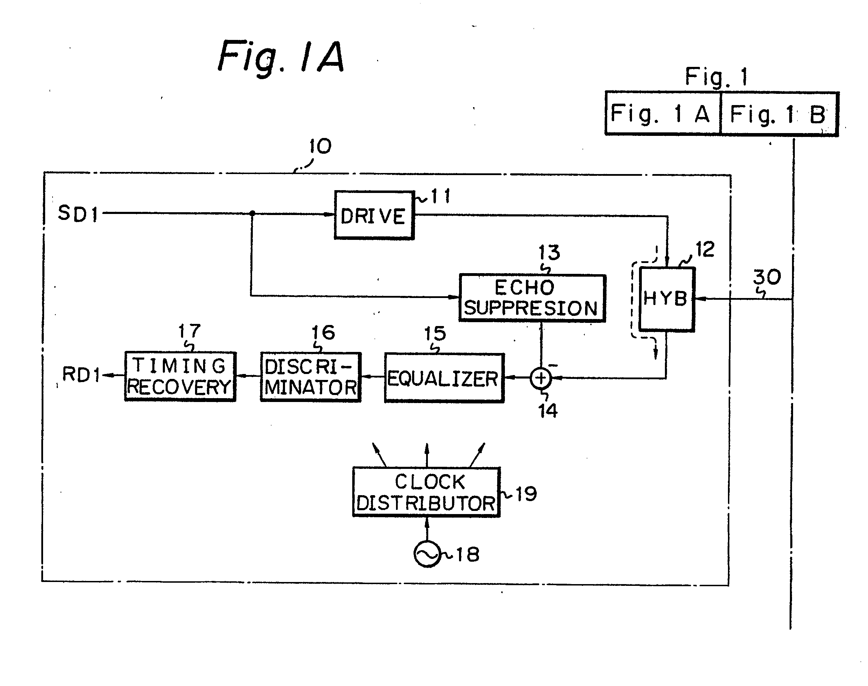

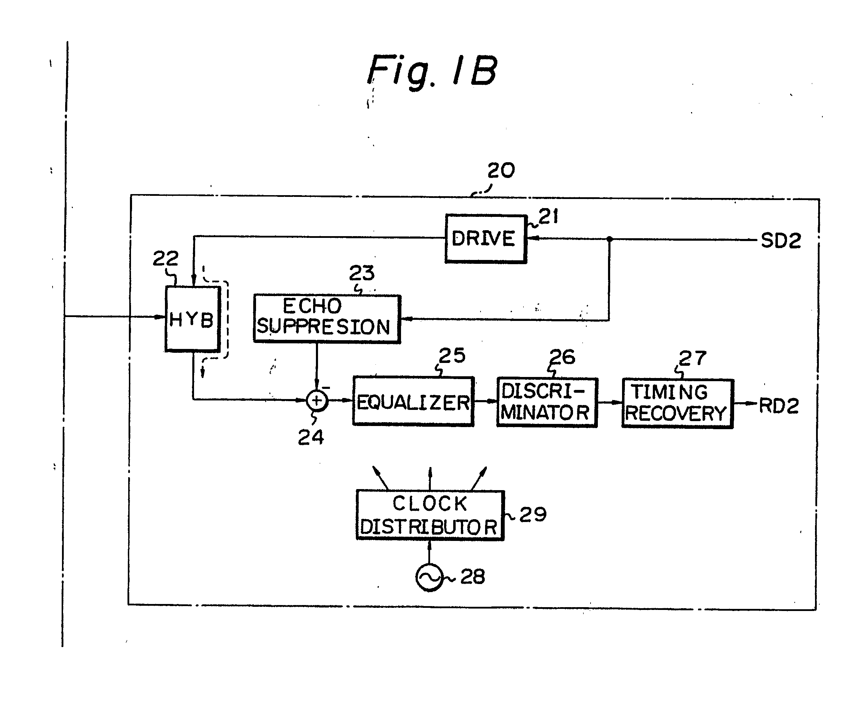

Figure 1 is a general block diagram of a conventional digital transmission system to which the present invention pertains. In Fig. 1, the basic construction of the system includes a master side transmitting-receiving (T/R) unit 10 and a slave side T/R unit 20 connected thereto by a single two-wire transmission line 30. The master side T/R unit 10 is mounted in an exchange office and includes therein a master clock source 18. The master clock is given to respective circuits via a clock distributor 19. The slave side T/R unit 20 is mounted at a subscriber side and includes therein a slave clock source 28. The slave clock is given to respective circuits via a clock distributor 29. In this case the slave clock is subordinate to the master clock.

When a send data SD1 is to be supplied by the T/R unit 10 to the T/R unit 20, the send data SD1 in the T/R unit 10 is applied to a hybrid transformer 12 via a drive circuit 11, where a four-wire to two-wire conversion is established to form a connection with the transmission line 30 and the send data SD1 is then transmitted, as a send signal, to the slave side T/R unit 20.

It should be understood here that there are many separate T/R unit pairs linked between the exchange office and the subscribers via individual transmission lines.

Conversely, when a send data SD2 from the slave side T/R unit 20 is to be transmitted via the transmission line 30 and applied to the master side T/R unit 10, the thus received signal at the master side T/R unit 10 is input, via the hybrid transformer 12, to a subtractor 14. The subtractor 14 cooperates With an echo cancellation circuit 13 to cancel any echo signal superimposed on the received signal. As is well known, the echo signal is a part of the send signal leaked via the hybrid transformer 12, along the path shown by a broken line arrow in Fig. 1, due to a mismatching in impedance at the hybrid transformer 12 with respect to the transmission line 30. Therefore, the echo signal can be cancelled in a receiver part of the T/R unit 10 by applying, from a transmitter part thereof, the send signal (SD1) to the subtractor 14 by way of the echo cancellation circuit 13, which matches the send signal level with the leakage send signal level via the hybrid transformer 12. Therefore, theoretically, the received signal given from the subtractor 4 contains no echo signal. The received signal is then applied to an equalizer 15 to compensate for various distortions given to the received signal transmission along the line 30. The thus equalized signal is applied to a discriminator 16 to obtain logic "1" and "0" signals. The "1" and "0" signals are supplied to a timing recovery circuit 17 to extract therefrom a clock component and then reproduce the send data SD2 as the received date RD1, by sampling the "1" and "0" signals with the use of the extracted clock component. The above mentioned operations are also applied to the slave side T/R unit 20 when the signal SD2 is transmitted and a signal RD2 is received.

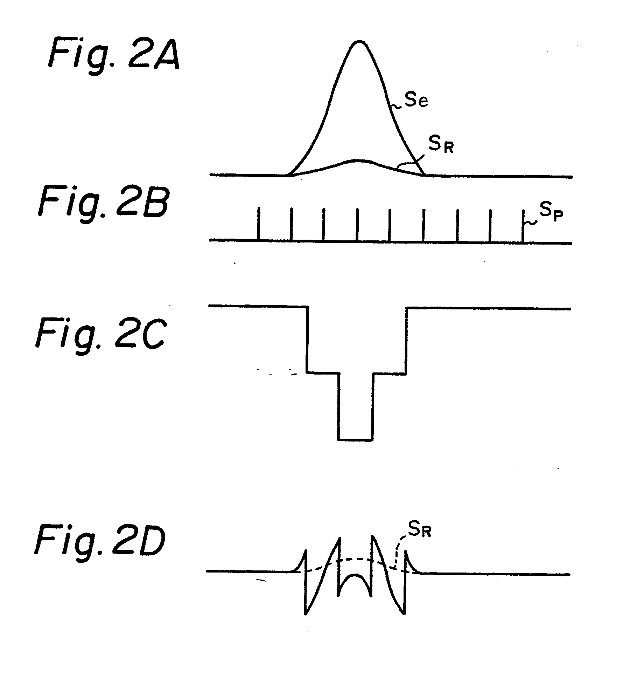

Figures 2A, 2B, 2C, and 2D depict waveforms of signals for explaining the echo cancellation circuit 13. Figure 2A depicts the echo signal given to the echo cancellation circuit 13 (same as for a echo cancellation circuit 23). The echo signal $S_e$ is sampled with a sampling signal $S_P$, shown in Fig. 2B, to produce a so-called replica. The replica is negatively added to the echo signal leaked from the hybrid transformer 12 at the subtractor 14 to obtain the zigzag-shaped signal shown in Fig. 2D. In Figs. 2D and 2A, the curve $S_R$ represents the received signal. As apparent from Fig. 2D, the echo signal is suppressed to zero only at every sampling point, but left as it is at portions other than these sampling points, and the thus unsuppressed echo signal impedes correct timing recovery.

A similar problem to that mentioned above is also raised during the echo cancellation operation. The echo cancellation circuit 13 (same as for the echo cancellation circuit 23) is made of, for example, a known transversal type filter provided with taps for determining coefficients. The tap coefficients are adaptively determined in accordance chiefly with the degree of the mismatching in impedance at the hybrid transformer 12 with respect to the transmission line 30. In this case, however, it is difficult to correctly determine each value of the tap coefficients, since a mixture of the echo signal and the received signal (not the echo signal only), is used for the determination.

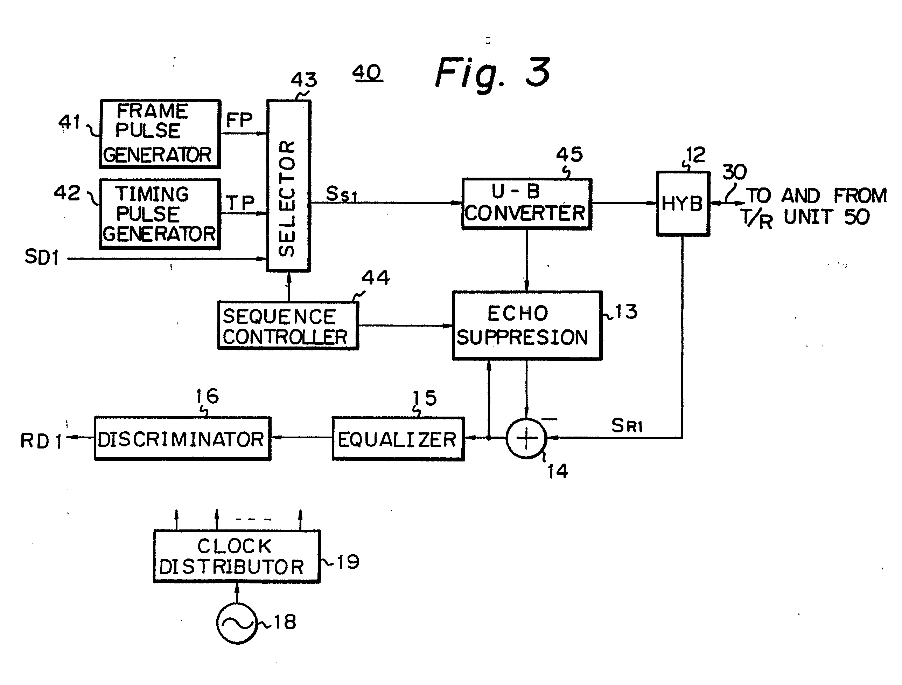

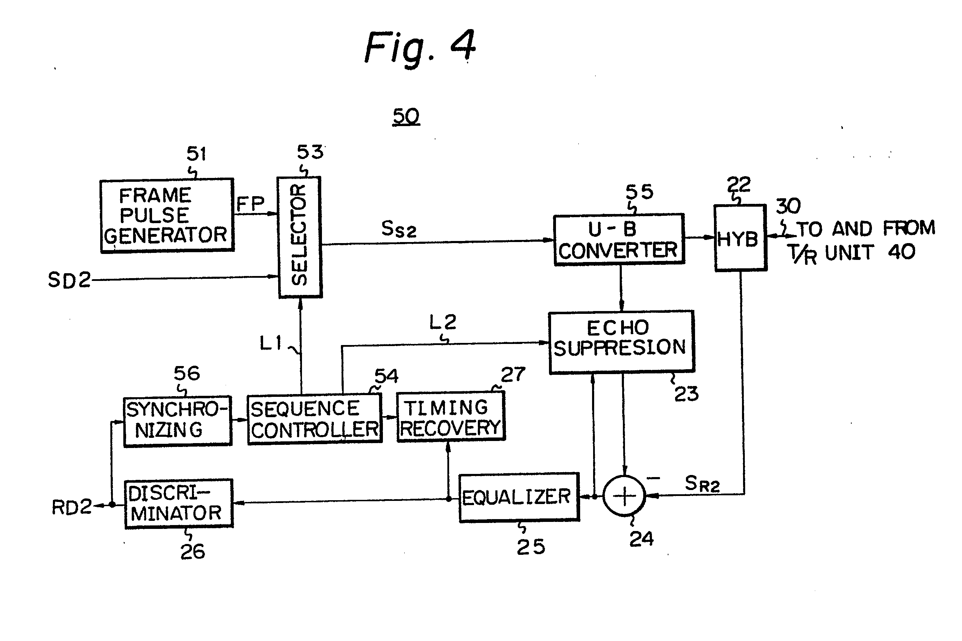

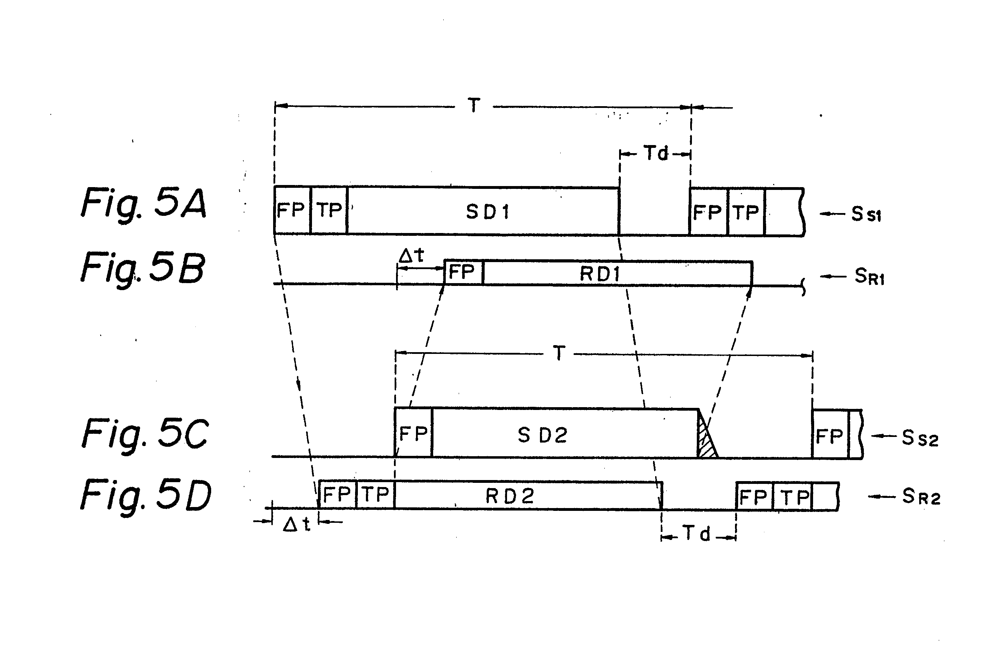

Figure 3 is a block diagram of a master side transmitting-receiving unit according to a first embodiment of the present invention. In Fig. 3, members identical to those of previous figures are represented by the same reference numerals or symbols (as for later figures). Figure 4 is a block diagram of a slave side transmitting-receiving unit according to a first embodiment of the present invention. Figures 5A, 5B, 5C, and 5D depict timing charts of signals appearing in the units shown in Figs. 3 and 4. Figures 5A and 5B depict the send signal $S_{S1}$ and the received signal $S_{R1}$, both at the master side, respectively. Similarly, Figs. 5C and 5D depict the send signal $S_{S2}$ and the received signal $S_{R2}$, both at the slave side, respectively.

The operation for transmitting data at the master side transmitting-receiving (T/R) unit 40 will be explained below with reference to Figs. 3 and 5A. The T/R unit 40 produces a send signal $S_{S1}$ composed of successive frames each having a period T. One of these frames is illustrated in Fig. 5A. The frame is set up with a frame pulse FP, a timing pulse TP, and the send data SD1, in this order. The frame pulse FP is generated by a frame pulse generator 41. The timing pulse TP is generated from a timing pulse generator 42. The frame pulse FP, the timing pulse TP, and the send data SD1 are selected one by one sequentially at a selector 43 to produce therefrom the send signal $S_{S1}$. The selection is made by a sequence controller 44. The sequence controller 44 also controls the selector 43 to create a non-signal duration $T_d$. Thus the selector 43 and the sequence controller 44 form a transmission control means. The thus set up send signal $S_{S1}$ is given to the hybrid transformer 12 via a unipolar-bipolar (U-B) converter 45 and the aforesaid drive unit (not shown).

In the master side T/R unit 40, the aforesaid timing recovery circuit is not incorporated because the timing recovery operation is not always necessary, since the T/R unit 40 has its own master clock source 18 and the master clock is supplied to each circuit via the clock distributor 19. In actuality, however, although the timing control for the frequency is not always necessary, the timing control for the phase preferably should be performed. This is because a transmission delay is not constant but slightly variable, due to various factors such as a change in temperature, a change in characteristics due to an elapse of a long term, and so on.

The send signal $S_{S1}$ is thus produced from the master side T/R unit 40 and transmitted, via the transmission line 30, to the slave side T/R unit 50 of Fig. 4 with a certain delay time $\Delta t$ (Fig. 5D). The thus received signal $S_{R2}$ is depicted in Fig. 5D. The signal $S_{R2}$ includes therein data to be reproduced later as the received data RD2. The content of RD2 is the same as that of SD1. It should be understood that the arrangement of the circuits in the slave side T/R unit of Fig. 4 is opposite relative to the arrangement of the circuit in the slave side T/R unit of Fig. 1.

In the slave side T/R unit 50 of Fig. 4, the received signal $S_{R2}$ is applied, via a subtractor 24, an equalizer 25, and a discriminator 26, to a synchronizing circuit 56 in which an internal clock of the T/R unit 50 is synchronized with the received signal $S_{R2}$, in accordance with the frame pulse FP contained in the signal $S_{R2}$. Subsequently, a sequence controller 54 activates the timing recovery circuit 27 to extract the clock component from the received signal $S_{R2}$ in accordance with the timing pulse TP contained therein.

The sequence controller 54 then also controls the echo cancellation circuit 23 and a selector 53. The selector 53 is controlled by the controller 54 to produce the send signal $S_{R2}$ composed of the successive frames; one of which is illustrated in Fig. 5C and set up with a frame pulse FP and the send data SD2 in this order. The frame pulse FP is generated by a frame pulse generator 51. The controller 54 also controls the selector 53 so that a non-signal duration is created in the period T. Thus the selector 53 and the sequence controller 54 form both a timing control means and a transmission control means. The thus set up send signal $S_{S2}$ is given to the hybrid transformer 22 via a unipolar-bipolar (U-B) converter 55 and the aforesaid drive unit (not shown).

The send signal $S_{S2}$ is thus produced from the slave side T/R unit 50 and transmitted via the transmission line 30, to the master side T/R unit 40 of Fig. 3 with a certain delay time Δt (Fig. 5B). The thus received signal $S_{R1}$ is depicted in Fig. 59. This signal $S_{R1}$ includes therein the data to be later reproduced as the received data RD1. The content of RD1 is the same as that of SD2. That is the received signal $S_{R1}$ is applied to the subtractor 14, the equalizer 15, and the discriminator 16, so that the received data RD1 is obtained.

The point is that the transmission control means, e.g., the selector 43 and the sequence controller 44 at the master side, operates in such a manner as to insert the timing pulse TP in each frame having the period T, while, at the slave side, the transmission control means, e.g., the selector 53 and the sequence controller 54, operates to inhibit an issue of the send signal $S_{S2}$ and at the same time, at the slave side, the timing control means, e.g., the sequence controller 54, controls the timing recovery circuit 27 to start the related timing recovery operation only during the inhibition of the issue of the send signal $S_{S2}$. Accordingly, in the slave T/R unit 50, it is possible to perform the timing recovery with the use of the received signal only, in the form of the timing pulse TP, without an echo signal being generated inside the T/R unit 50. This means that a stable and accurate timing recovery operation can be carried out.

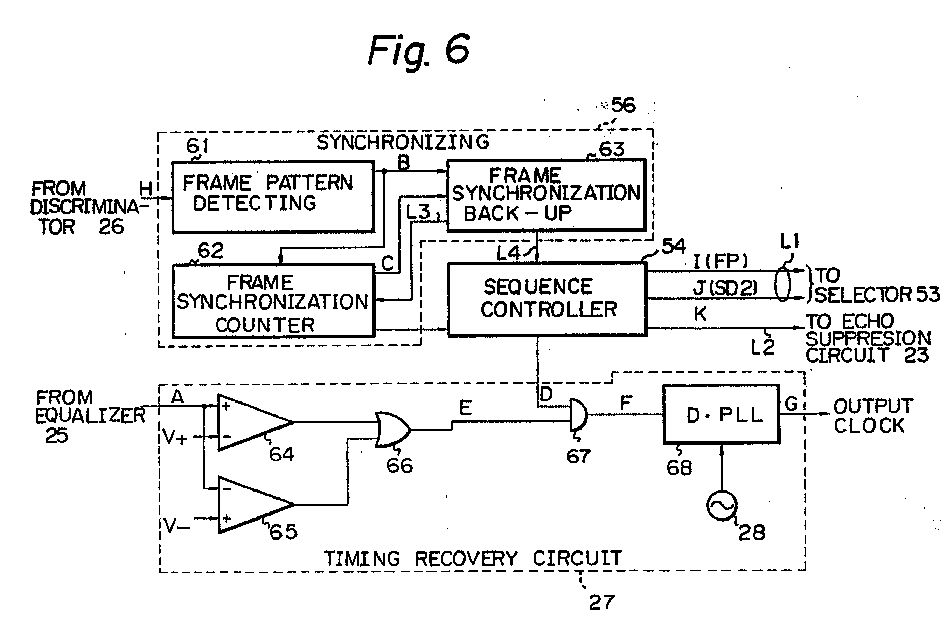

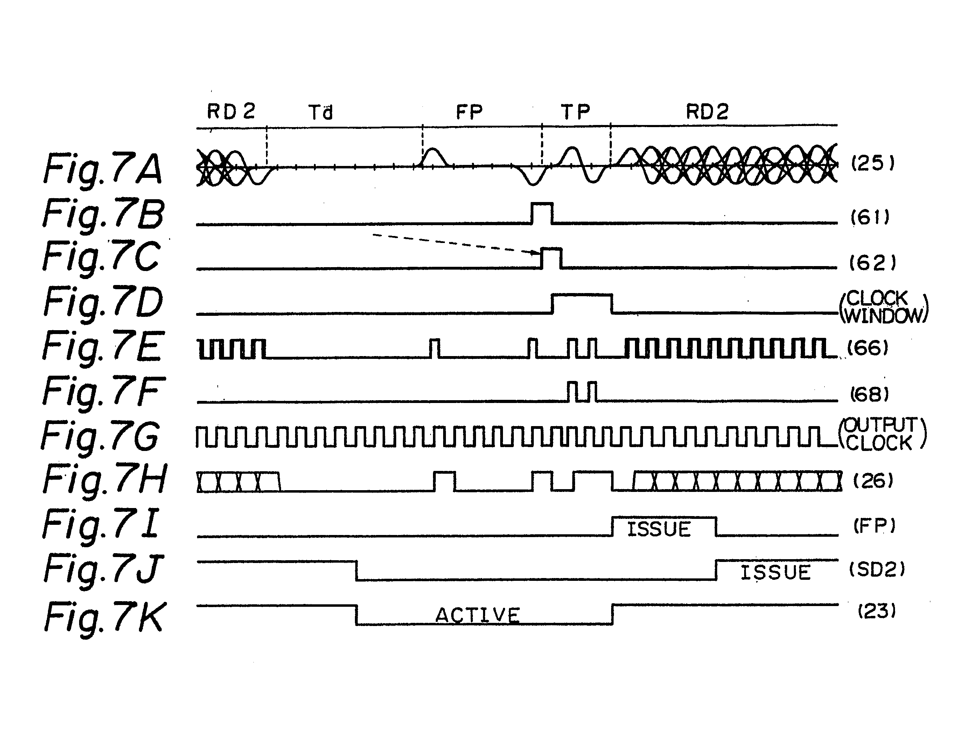

Figure 6 illustrates a more detailed example or the synchronizing circuit and the timing recovery circuit in cooperation with the sequence controller shown in Fig. 4. Figure 7A through 7K depict the waveforms appearing at the portions A through K shown in Fig. 6, respectively. The synchronizing circuit 56 is comprised or a frame pulse detecting circuit 61, a frame synchronization counter 62, and a frame synchronization back-up circuit 63. The timing recovery circuit 27 is comprised of an upper side comparator 64, a lower side comparator 65, an OR-gate 66, an AND gate, a digital phase-locked loop (D•PLL) circuit, and the aforesaid slave clock source 28.

The discriminator 26 of Fig. 4 produces the discriminated logic "1" and "0" signals, which appear at the portion H in Fig. 6. These signals have the waveform as shown in Fig. 7H in response to the waveforms of Fig. 7A representing the aforesaid signals RD2, FP, and TP. The signal at the portion H is input to the frame pattern detecting circuit 61 by which the frame pattern, including the frame pulse FP, is detected. When the frame pattern is detected, a detection output is produced therefrom having the waveform of Fig. 7B and applied to both the frame synchronization back-up circuit 63 and the frame synchronization counter 62, to start the related counting operation. When the counter 62 completes the counting of a predetermined count number, it produces a end pulse appearing at the portion C having the waveform or Fig. 7C. The end pulse is given to the circuit 63. The predetermined count number is, for example, "160" or "168" which corresponds to the bit number composing each frame having the period T.

The frame synchronization back-up circuit 63 determines whether or not the frame pulse detection is established. Specifically, when the circuit 63 receives the detection outputs from the circuit 61 several times in succession, the circuit 63 determines that the frame synchronization is correctly established. Soon after this, the circuit 63 sends a command, via a line L3, to the counter 62 for starting the counting operation. The correct establishment of the frame synchronization is informed, via a line L4, to the sequence controller 54. Then the controller 54 is activated. The controller 54 preferably can be made of a read only memory (ROM) which stores therein various data specifying the related control sequence written thereinto in advance. That is, the controller 54 issues command signals, at the portions I, J, and K, on lines L1 and L2, both shown also in Fig. 4. The command signals at the portions I and J are given to the selector 53 with the waveforms of Figs. 7I and 7J, respectively. The command signal at I indicates the start of an issue of the frame pulse FP, and the command signal at J indicate the start of an issue of the send data SD2. Before the issue of FP and SD2, the command signal at K is given to the echo cancellation circuit 23 (Fig. 4) for activating the same to adjust the tap coefficients adaptively at $T_d$. In accordance with the above mentioned sequence control by the controller 54, the slave side T/R unit 50 can achieve the timing recovery operation with the use of the transmitted timing pulse TP and without generating an echo signal which would, if generated, impede an establishment of an accurate timing recovery, as mentioned previously. For this, the sequence controller 54 produces a clock window signal appearing at the portion D with the waveform of Fig. 7D and applies it to the AND gate 67 to open the same.

On the other hand, the output from the equalizer 25 is applied to the comparators 64 and 65 at the portion A, with the waveforms of Fig. A and compared in level with reference voltages $V_+$ and $V_-$ independently. The upper and lower side comparators 64 and 65 are responsible for the positive and negative pulses of the bipolar output shown in Fig. 7A, respectively. Theoretically, either one of these comparators can derive the clock component. In actuality, however, two comparators are preferable to obtain a larger (two times) number of the compared outputs than that obtained with the single comparator. The compared outputs from the comparators 64 and 65 are OR'ed at the OR gate 66 and the resultant output at the portion E is applied to the aforesaid AND gate 67, which output has the waveform of Fig. 7E. Among many clock components from the comparators 64 and 65, only the clock component defined by the timing pulse TP is selectively extracted by the clock window signal (D) at the AND gate 67. The thus extracted clock component cannot be influenced by the echo signal, since the send data SD2 causing the echo signal is not transmitted until the timing pulse duration has elapsed. This means that a pure clock component is supplied from the AND gate 67, and accordingly, the D·PLL circuit 68 is driven by the pure clock component derived from the received signal. Thus, the slave clock from the slave clock source 28 is subordinated in synchronization to the received signal $S_{R2}$. In other words, the internal clock of the slave side T/R unit 50 is synchronized with the received signal $S_{R2}$ , so that a pulled-in output clock appears at the portion G. The aforesaid said sampling makes easy to simplify the construction of the echo cancellation circuit 23 than does usual echo cancellation circuit, since the echo cancellation circuit 23 is controlled with the use of the related echo signal only in the non-signal duration $T_d$ shown in Fig. 5D, in which no received signal $S_{R2}$ exists but only the echo signal caused by the send signal $S_{S2}$ exists. The received non-signal duration $T_d$ of Fig. 5D is the same as the transmitted non-signal duration $T_d$ of Fig. 5A. The non-signal duration $T_d$ is determined such that the next transmitted pulses FP and TP can be received at the slave side after the trial of the skirt made with the echo signal (refer to the hatched area in Fig. 5C) induced by the send data SD2.

It should be noted that the master side T/R unit 40 can also perform the timing recovery, if necessary. In this case, the timing recovery operation should be achieved in the non-signal duration $T_d$ of Fig. 5A. This is because the duration $T_d$ contains no echo signal induced by the send data SD1, but only the received signal $S_{R1}$. Therefore, the timing recovery in the master side T/R unit 40 also can be performed stably and accurately.

Furthermore, it should be noted that, in the slave side T/R unit 50 of Fig. 4, the training pulse (TP) duration can be utilized for performing a line equalization by the equalizer 25. The echo signal also causes a deterioration in the line equalization. Therefore, it is preferable to achieve the line equalizing operation in the non-single duration $T_d$ , since no such deleterious echo signal exists in the duration $T_d$ , and thus a stable and adaptive line equalization can be realized.

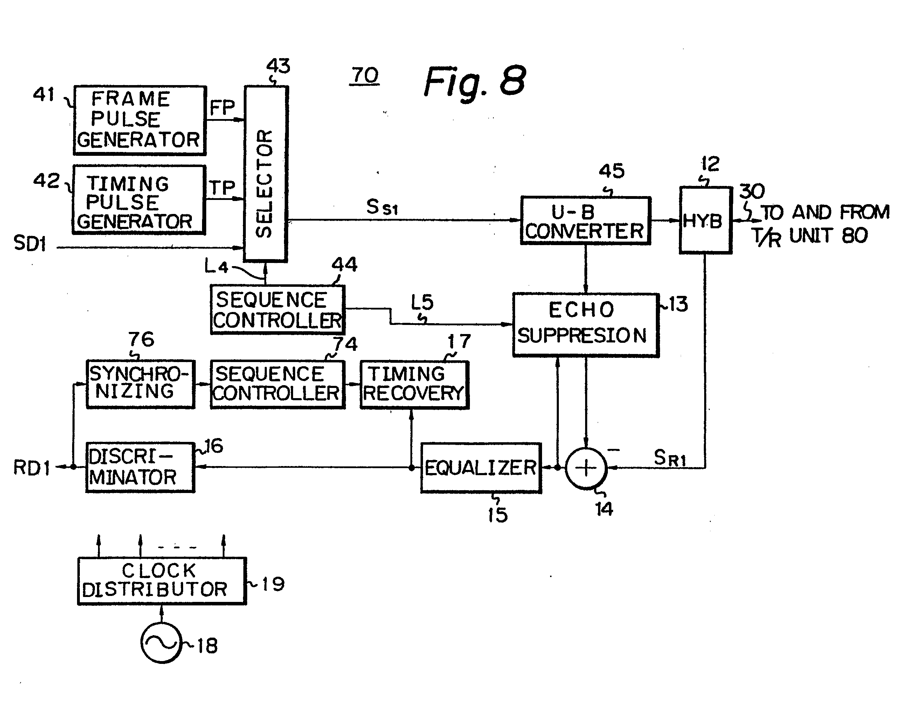

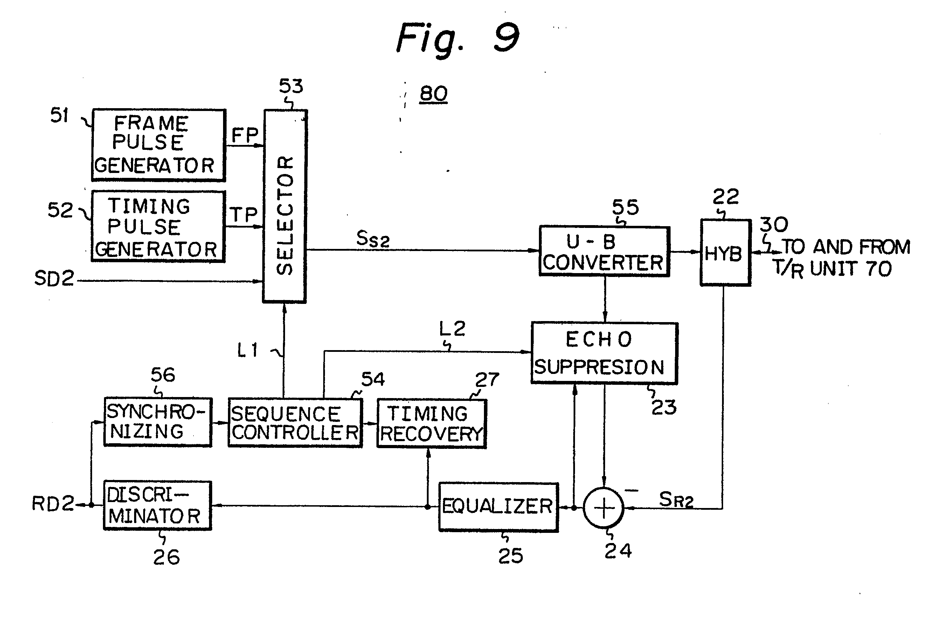

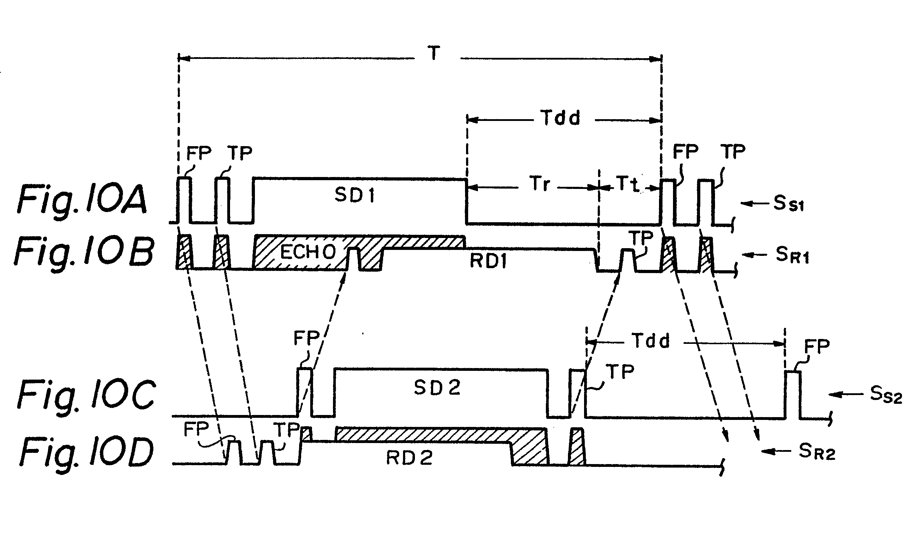

Figure 8 is a block diagram of a master side transmitting-receiving unit according to a second embodiment of the present invention. Figure 9 is a block diagram of a slave side transmitting-receiving unit according to a second embodiment of the present invention. Figure 10A, 10B, 10C, and 10D depict timing charts of signals appearing in the units shown in Figs. 8 and 9. Figures 10A through 10D correspond to Figs. 5A through 5D, respectively. That is, Figs. 10A and 10B depict the send signal $S_{S1}$ and the received signal $S_{R1}$ , both at the master side, respectively. Similarly, Figs. 10C and 10D depict the send signal $S_{S2}$ and the received signal $S_{R2}$ , both at the slave side, respectively. It should be understood that the frame pulse FP and the timing pulse TP are not illustrated integrally as one piece in Figs. 10A through 10D, as shown in Figs. 5A through 5D. This difrerence in illustration is not important, but merely for facilitating an understanding of the echo signals illustrated with hatchings.

The operation for a transmission at the master side T/R unit 70 will be first explained below with reference to Figs. 8 and 10A. The members 76 and 74 are substantially the same as the synchronizing circuit 56 and the sequence controller 54 (both shown in Fig. 4), respectively. The frame pulse generator 41, the timing pulse generator 42, the selector 43, and the sequence controller 74 cooperate with each other to produce the send signal $S_{S1}$ shown in Fig. 10A, as in the first embodiment of Fig. 3 with the corresponding members 41, 42, 43, and 44. That is, the frame pulse FP, the timing pulse TP and the send data SD1 are set up, as the send signal $S_{S1}$ , in this order. Further, a non-signal duration $T_{dd}$ is also created in the period T of each frame. The difference between the duration $T_{dd}$ of Fig. 10A and the corresponding duration $T_{dd}$ of Figs. 5A and 5D is that, in the second embodiment, the duration $T_{dd}$ is composed of two successive durations $T_r$ and $T_t$. The duration $T_r$ is determined

to be equal to twice the trasnmission delay time of the transmission signal from the master side unit to the slave side unit and vice versa. The duration $T_t$ is determined to have enough time to accept the timing pulse TP transmitted from the slave side T/R unit 80. The thus set up send signal $S_{S1}$ is transmitted, via the unipolar-bipolar converter 45, the hybrid transformer 12, and the transmission line 30, to the slave side T/R unit 80. At this time, the echo signal, induced by the signal $S_{S1}$ , leaks into the own side receiver part, as mentioned previously. In the present invention the thus induced echo signal is used for adaptively adjusting the echo cancellation circuit 13, especially with the use of the echo signal derived from at least the timing pulse TP (first occurrence in Fig. 10A) by means of the sequence controller 74 which controls, on one hand, the selector 43 to produce the timing pulse TP, and on the other hand, controls the echo cancellation circuit 13 to start the adaptive adjustment for suppressing the echo signal. It should be recognized that the adaptive adjustment can be carried out with a high degree of accuracy, since the echo cancellation circuit 13 is no longer influenced by any received signal $S_{R1}$ given from the slave side T/R unit 80.

The send signal $S_{S1}$ from the master side T/R unit 70 reaches the slave side T/R unit 80 with a certain delay time (equal to $T_r/2$) and is received thereby as the received signal $S_{R2}$ with the waveform shown in Fig. 10D. The signal $S_{R2}$ is applied, via the subtractor 24, the equalizer 25, and the discriminator 26, to the synchronizing circuit 56 in which the internal clock of the T/R unit 80 is synchronized with the received signal $S_{R2}$ , in accordance with the frame pulse FP contained in the signal $S_{R2}$. Then, with the use of the thus synchronized internal clock, the sequence controller 54 is activated to control the selector 53 such that, as shown in Fig. 10C, the frame pulse FP (first occurrence), the send data SD2, and the timing pulse TP are produced in this order. The pulses FP and TP are generated by the respective generators 51 and 52 and produced, together with the send data SD2, one by one under control of the controller 54. Also, the non-signal duration $T_{dd}$ (Fig. 10C) is created. The duration $T_{dd}$ is identical to the duration $T_{dd}$ of Fig. 10A, and thus, composed of the durations $T_r$ and $T_t$. The thus formed send signal $S_{S2}$ is transmitted, via the transmission line 30, to the master side T/R unit 70, and at the same time, the echo signal, induced by the send signal $S_{S2}$ , leaks into the own side receiver part with the waveform with the hatchings as illustrated in Fig. 10D. In this case, the adaptive adjustment of the echo cancellation circuit 23 is achieved by using the echo signal under the control of the sequence controller 54 every time the timing pulse of Fig. 10C is produced. Therefore, the circuit 23 is not influenced by a received signal $S_{R2}$ , which no longer exists as shown in Fig. 10D.

The thus formed send signal $S_{S2}$ is transmitted, via the converter 55, the hybrid transformer 22, and the transmission line 30, to the master side T/R unit 70, with a certain transmission delay time (equal to $T_r/2$) from the slave side T/R unit 80 to the master side T/R unit 70.

The thus received signal $S_{R1}$ (refer to Fig. 10B) at the master side T/R unit 70 is applied, via the subtractor 14, the equalizer 15, and the discrminator 16, to the synchronizing circuit 76 in which the internal clock of the T/R unit 70 is synchronized in phase with the received signal $S_{R1}$. Then, with the use of the thus synchronized internal clock in phase, the sequence controller 74 starts activating the timing recovery circuit 17 in order to establish a timing recovery, with the use of the received timing pulse TP shown in Fig. 10B. At this time, no echo signal exists in the master side T/R unit 70, which means that the timing recovery can be performed with high degree of accuracy.

Alternatively, in the master side T/R unit 70, the timing recovery operation also can be achieved not only by using the training pulse TP (Fig. 10B), but also the received data (RD1) signal itself appearing in the duration $T_r$ of Fig. 10A. This is because there is no echo signal in the duration $T_r$. In this case, the use of the signal RD1 for the timing recovery is possible under a condition that the bit amount or the signal RD1 is sufficient to achieve the timing recovery. In other words, the condition is that wherein the duration $T_r$ is relatively long, i.e., the slave side T/R unit 80 is located far from the master side T/R unit 70.

Further, in the slave side T/R unit 80, the timing recovery operation can be achieved with not only the received timing pulse TP of Fig. 10D, as in the above-mentioned way for achieving the same, but also the frame pulse FP of Fig. 10D. According to this measure, the reliability of the timing recovery can be more improved than that of the aforementioned way, with the use of the timing pulse TP only.

As mentioned above, in the second embodiment of the present invention, the timing recovery operation is achieved in not only the slave side T/R unit 80, but also in the master side T/R unit 70, by means of the timing recovery circuits 27, both shown in Figs. 8 and 9. In the previously explained first embodiment of the present invention, however, this timing recovery circuit is not incorporated in the master side T/R unit 40 (Fig. 3), but in the slave side T/R unit only as shown by the reference numeral 27 in Fig. 4. Therefore, the master side T/R unit according to the present invention is susceptible to phase deviation of the received signal

$S_{S1}$ due to a change in the transmission characteristics of the transmission line 30. From this viewpoint, the first embodiment is inferior to the second embodiment. Contrary to this, however, the first embodiment is superior to the second embodiment from the viewpoint of transmission efficiency, which is simply clarified by comparing the length of the non-signal duration $T_d$ (Fig. 5A) in the first embodiment with that of the non-signal duration $T_{dd}$ (Fig. 10A) in the second embodiment. This stems from the fact that, of course, each frame should deliver the send data in as large an amount as possible, i.e., the non-signal term ($T_d$, $T_{dd}$) should be as short as possible.

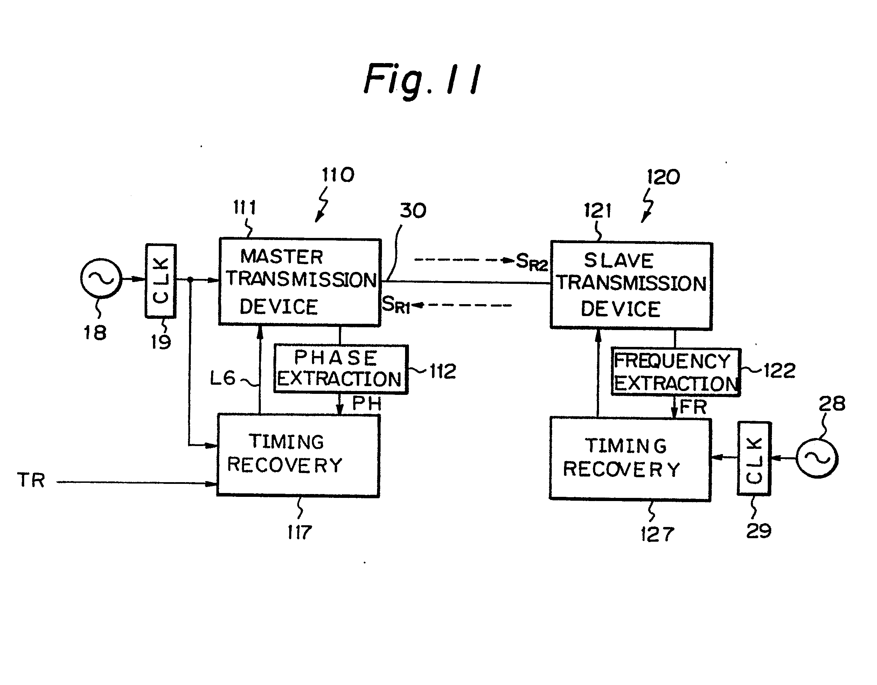

Figure 11 is a general block diagram of a digital transmission system according to a modified first embodiment of the present invention. The system is constructed with a master side (T/R) unit 110, a slave side T/R unit 120, and the transmission line 30. A block 111 represents a master side transmission device, i.e., all of the circuits comprising the T/R unit 40 of Fig. 3. A block 121 represents a slave side transmisssion device, i.e., all of the circuits comprising the T/R unit 50 of Fig. 4, other than timing reocvery circuit 27. A block 112 represents a phase component extraction means, and a block 122 represents a frequency component extraction means. The basic functions of timing recovery circuits 117 and 127 are the same as those of the timing recovery circuits 17 and 27 shown in Fig. 1, respectively. The slave side T/R unit 120 is supplied with the received signal $S_{R2}$ and the frequency component FR is extracted from the signal $S_{R2}$ with the aid of the frequency extraction means 122. The frequency component FR is input to the timing recovery circuit 127 so as to synchronize the slave side internal clock (from the source 28) with the received signal $S_{R2}$ regarding both the frequency and the phase, whereby the timing recovery is performed. On the other hand, the master side T/R unit 110 is supplied with the received signal $S_{R1}$ given from the slave side, and the phase component PH is then extracted from the signal $S_{R1}$ with the aid of the phase extraction means 112. The phase component PH is input to the timing recovery circuit 117 so as to synchronize the master side internal clock (from the source 18) with the received signal $S_{R1}$. It should be noted that the timing recovery operation in the circuit 117 is achieved only during a reception of a training signal TR. The training signal TR is used for initiating the timing recovery operation every time data transmission is to be started.

According to the modified first embodiment, first, the timing recovery operation is achieved in the slave side T/R unit 120 with the use of the received signal $S_{R2}$ given from the master side T/R unit 110, whereby the timing recovery is performed with the use of the frequency component FR extracted by the means 122. In this case, the phase component necessarily is also extracted based on the frequency component. Thus the recovered timing signal is obtained at the slave side T/R unit 120. Soon after this, a phase adjusting signal is returned to the master side T/R unit 110. The phase adjusting signal is synchronous with the thus recovered timing signal. The master side T/R unit 110 is supplied with the returned phase adjusting signal, so that the timing recovery is started in the master side T/R unit 110 by using the same. It should be noted here that the timing recovery in terms of the frequency at the master side T/R unit 110 is identical to that appearing at the slave side T/R unit 120. This is because the timing signal recovered at the slave side T/R unit 120 is derived from the received signal $S_{R2}$ given from the master side T/R unit 110. However, the timing signal regarding the phase necessarily varies in accordance with the transmission characteristics. Therefore, in the master side T/R unit 110, the timing recovery is performed, not for the frequency component but for the phase component only, at the timing recovery circuit 117 with the aid of the phase extraction means 112.

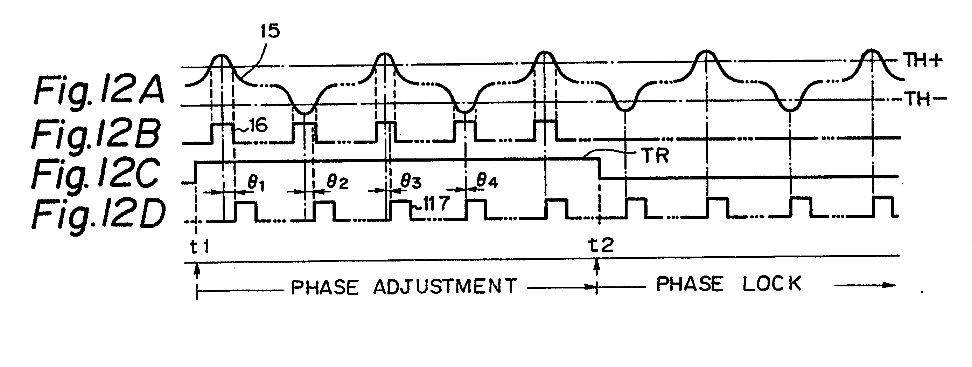

Figure 12A through 12D depict waveforms of the signals for explaining the timing recovery performed in the master side T/R unit 110. The slave side T/R unit 120 is first supplied with the received signal $S_{R2}$ and then the phase adjusting signal is returned to the master side T/R unit 110, as the received signal $S_{R1}$. The signal $S_{R1}$ is applied to an equalizer identical to the equalizer 15 of Fig. 3, so that the equalized output is produced therefrom with the waveform 15 shown in Fig. 12A. The output is then applied to a discriminator identical to the discriminator 16 of Fig. 3, in which the output is compared in level with positive and negative threshold levels $TH^+$ and $TH^-$, respectively. Thus, the compared output is obtained with the waveform 16 shown in Fig. 12B. As mentioned before, the training signal TR is used for initiating the timing recovery evey time data trasnmission is to be started. The signal TR is shown in Fig. 12C. The signal TR is issued at the time t1 and ends at the time t2. In other words, the term from t1 to t2 exists for a phase adjustment. The timing recovery circuit 117 of Fig. 11 operates to adjust the phase so as to synchronize in phase the internal clock, i.e., the master clook (18), with the received signal $S_{R1}$ during the reception of the signal TR. The difference in phase therebetween gradually changes to zero, as schematically shown by $\theta_1 \rightarrow \theta_2 \rightarrow \theta_3 \rightarrow \theta_4$ in Fig. 12D.

When the training signal TR is stopped at the time t2, no further input is applied to the timing recovery circuit 117. Accordingly the phase in the circuit 117 is locked after the time t2 ("PHASE LOCK") with the phase adjusted immediately before the stoppage of the signal TR. Incidentally, an initial training operation is also achieved in the slave side, as does in the master side.

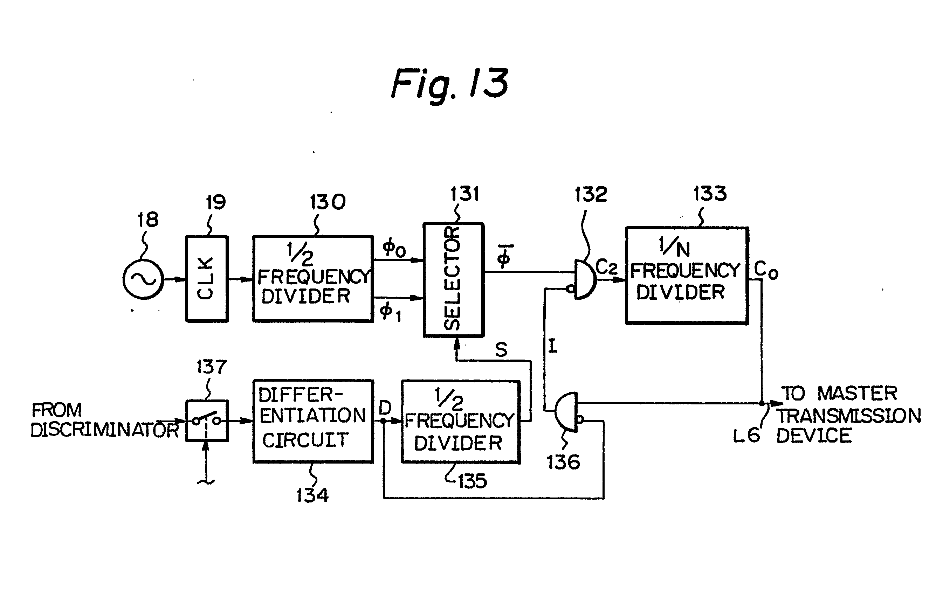

Figure 13 illustrates a more detailed example of the timing recovery circuit together with the phase extraction means at the master side T/R unit 110 shown in Fig. 11. Figures 14A through 14I depict timing charts for explaining the operation of the circuit shown in Fig. 13. In Fig. 13, reference numeral 130 represents a 1/2 frequency divider, 131 a selector, 132 an AND gate, 133 a 1/N frequency divider, 134 a differentiation circuit, 135 a 1/2 frequency divider, 136 an AND gate, and 137 a switch.

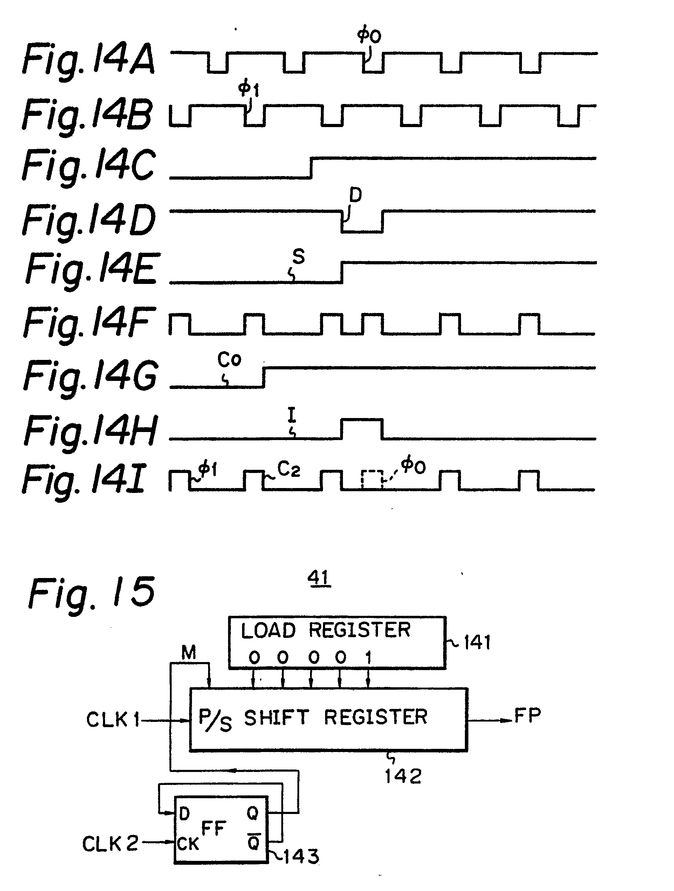

The 1/2 frequency divider 130 produces the divided output pulses $\phi 1$ and $\phi 0$ with the waveforms shown in Figs. 14A and 14B, respectively. Before an issue of the training signal TR, a certain output S is determined according to an individual condition of the related circuit and is produced from the 1/2 frequency divider. In response to the output S, the selector 131 now selects, for example, the $\phi 1$ side output pulse, and therefore, the output $\overline{\phi}$ from the selector 131 exhibits the waveform shown in Fig. 14F. The character $\overline{\phi}$ denotes an inversion in level with respect to an output pulse $\phi$ ($\phi 0$ or $\phi 1$). The selected output $\overline{\phi}$ is input to the AND gate 132 and allowed to pass therethrough as an output $C_2$ (Fig. 14I) by an inverted gate input I. The gate output I is shown in Fig. 14H. The output $C_2$ is applied to the 1/N frequency divider 133, where the number N is preferably equal to 48. The thus frequency divided output $C_0$ from the divider 133 is supplied, via a line L6, to the master transmission device 111. The waveform of the output $C_0$ is shown in Fig. 14G.

When the training signal TR is generated in the master side T/P unit 110, the signal TR makes the switch 137 ON. Therefore the output from the discriminator starts being supplied to the difrerentiation circuit 134. The thus differentiated output is represented by, for example, D in Fig. 14D. The output D is applied, on one hand, to the 1/2 frequency divider 135, and on the other hand, to the AND gate 136. When the output D is high level, the AND gate 136 is closed thereby. Every time two successive outputs D are given to the 1/2 frequency divider 135, the divider 135 changes the level of its output S, as shown at the middle of Fig. 14E. In response to the output S now changed to high level, the selector 131 changes the selection of the output pulse from $\phi 1$ to $\phi 0$.

On the other hand, the AND gate 136 produces the gate output I at a high level in resonse to the output D inverted to a high level at the input of the AND gate 136. The thus obtained gate output I is inverted to a low level at the input of the AND gate 132 and clones this gate 132. Therefore, the first of the output pulses, now the $\phi 0$ side output pulses selected by the selector 131, is inhibited from passing through the gate 132, as schematically illustrated by the pulse $\phi 0$ indicated by a broken line in Fig. 14I. This means that the output $C_0$ is lagged in phase, since the one output pulse $\phi 0$ is not given to the divider 133, and thereby the internal clock is synchronized in phase with the received signal $S_{R1}$. Inversely, where the output (Fig. 14C) from the discriminator exists and, at the same time, the output $C_0$ (Fig. 14G) is low level at the time the differentiated output D is to be produced, the pulse $\phi 0$ is not inhibited to pass through the AND gate 132. In this case, accordingly, the output $C_0$ is led in phase, due to the existence of the first output pulse $\phi 0$ (corresponding to the broken line pulse shown in Fig. 14I).

When the above mentioned phase adjustment is completed, i.e., the phase difference $\phi 4$ of Fig. 12D reaches almost zero, generation of the training signal TR is stopped. Therefore the switch 137 is made OFF by the stoppage of the signal TR, and no further output from the discriminater is supplied to the differentiation circuit 134. Thus, the status of the selector 131 at the end of the phase adjustment is maintained as is after the time t2 of Fig. 12D, so that either $\phi 0$ or $\phi 1$ from the divider 130, determined by the last status of the selector 131, is supplied to the divider 133 to produce $C_0$ as a timing recovery output having a desired phase and the thus determined output $C_0$ is supplied, from now on, to the master transmission device 111 to maintain a usual data transmission. It should be noted that the relationship in timing explained with reference to Fig. 5 is still satisfied even in the term of the phase adjustment. That is, when the master side T/R unit 110 achieves the above mentioned timing recovery with the use of the received signal $S_{R1}$, a send signal $S_{S1}$ does not exist in the master side T/R unit 110. This means that the timing recovery is not influenced by an echo signal which would be induced by the signal $S_{S1}$, and thus a highly accurate timing recovery can be attained.

Returning again to Figs. 3, 4, 8, and 9, the frame pulse generator 41 and the timing pulse generator 51 will be explained in detail below. The frame pulse FP can be composed of a 6 bit train, for example, "10000M", and the timing pulse TP also can be composed of a 4 bit train, for example, "0110". The character M denotes a bit, the logic of which changes to "1" and "0" alternately in sequence for every frame.

Figure 15 is a detailed example of the frame pulse generator. The frame pulse generator 41 is constructed as a presettable shift register. That is, the generator 41 is comprised of a load register 141, a parallel/serial (P/S) shift register 142 and a flip-flop 143. According to the above example, the logic "10000" of the 5 bit train is loaded in advance in the load register 141. The 6 bits are set all at once in the P/S shift register, together with the bit M supplied from the flip-flop. Then the 6 bit train is produced bit by bit, in synchronism with a clock CLK1 to obtain the frame pulse FP. The flip-flop is triggered by a clock CLK2. The clock CLK2 has the same period as that of the frame, i.e., T of Fig. 5A. Therefore, logics "1" and "0" are generated, as the bit M, alternately, at every frame. Although the clock CLK1 is the same as the internal clock.

It should be understood that the timing pulse generator 42 also can be constructed in a similar manner to that of the above mentioned frame pulse generator 41, but the content of the load register 141 and the M bit position should be modified so as to conform with the bit train composing the timing pulse TP. Further it is also possible to form these generators 41 and 42 integrally as one body, by using a 10 ( = 6 + 4) bit P/S shift register and a load register which stores therein both the sets of the aforesaid 6 and 5 bit trains.

Regarding the frame pulse FP and the timing pulse TP, it is possible to cancel the timing pulse TP. In this case, the frame pulse is utilized as the timing pulse TP simultaneously. This conception can be applied to the aforesaid embodiments, however, some changes must be effected in the receiver part.

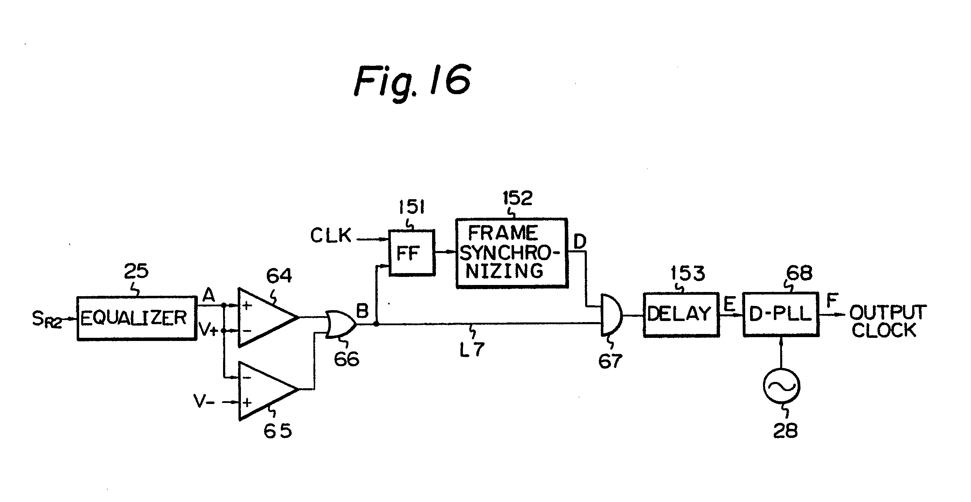

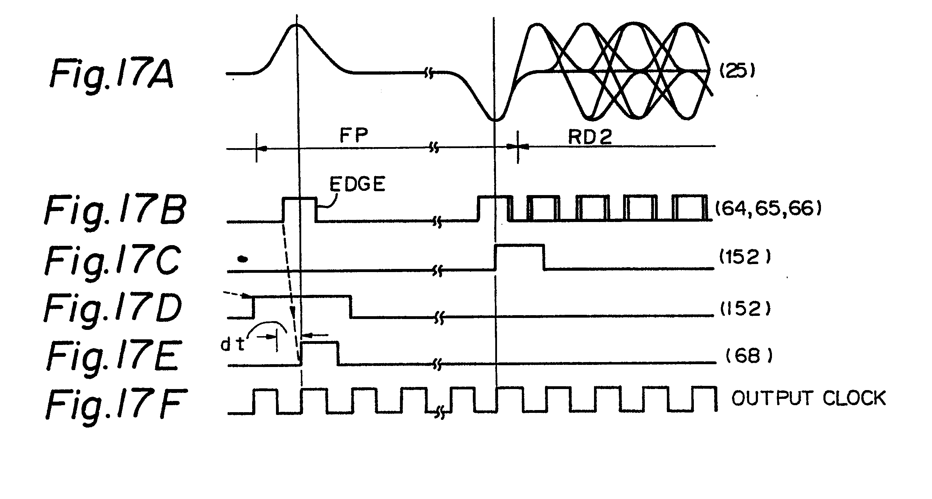

Figure 16 is a circuit diagram of a modified receiver part to be operated with the frame pulse FP only. It should be understood that although Fig. 16 shows the modified slave side receiver part as an example, the related modification also can be effected in the master side receiver part in a similar way to that of Fig. 16. Figures 17A through 17F depict wave-forms of signals appearing in Fig. 16 at the portions A through F, respectively. Figure 16 corresponds to the previously explained Fig. 6, and therefore, some members used in the circuit of Fig. 6 also are used in the circuit of Fig. 16. The received signal $S_{R2}$ is applied to the equalizer 25 to produce the equalized signal with the waveform of Fig. 17A. The output from the equalizer 25 is applied to both the comparators 64 and 65 to produce, via the OR gate 66, the compared output with the waveform of Fig. 17B. The output at the portion B is applied to, on one hand, a flip-flop (FF) 151 and, on the other hand, to the AND gate 67. The flip-flop 151 momentarily holds logic "1" or "0" of the compared output from the OR gate 66 in synchronism with the internal clock CLK, which is identical to the output clock from the digital phase-locked loop (D•PLL) circuit 68. A frame synchronizing circuit 152 receives the output from the flip-flop 151 and produces therein a frame pulse detection signal with the waveform of Fig. 17C. In response to the frame pulse detection signal, the circuit 152 creates a clock window pulse with the waveform of Fig. 17D. It should be noted that the clock window pulse illustrated in Fig. 17D is created in response to the frame pulse detection signal which has been generated immediately before the occurrence of the detection signal illustrated in Fig. 17C. Once the frame synchronization is established by the circuit 152, it is easy to find the frame pulse detection signal (Fig. 17C). This is because each frame pulse FP has the same bit pattern as each other, and further, the frame pulses are given periodically with a constant time interval T.

The above mentioned clock window pulse is used to allow the predetermined edge portion (refer to "EDGE" in Fig. 17B) of the frame pulse FP to pass through the AND gate 67 selectively. In other words, the clock window pulse inhibits the compared output corresponding to the received data RD2 to pass through the AND gate 67. This is because it is impossible to extract the clock component from the compared output of RD2, since the RD2 signal has deleterious jitter due to an inter symbol interference. The jitter is schematically illustrated by double lines at the leading and falling edges of each compared output pulse shown in Fig. 17B.

The thus passed edge portion via a line L7 and the AND gate 67 is input to a delay circuit 153 through which a predetermined delay time (dt) is given to the edge portion to obtain a delayed edge portion with the waveform of Fig. 17E. The delay is important to make the rising edge of the edge portion coincide with the center of each compared output. Thus, a virtual timing pulse is obtained which is synchronized with the rising edge of the delayed edge portion, and therefore, the virtual timing pulse can hit each center of the received data pulse, and therefore, a highly accurate timing recovery can be expected since the aforesaid jitter portions are excluded. Based on the above-mentioned fact, a desired output clock (refer to Fig. 7F) is obtained which is correctly synchronized with the virtual timing pulse derived from the frame pulse per se, with the aid of the D•PLL circuit 68 driven by the output pulse (E) from the delay circuit 153. In this case a certain problem may arise in that it is difficult to synchronize the D•PLL circuit 68 with the output pulse (E) promptly, since the pulse (E) is not generated continually, but periodically. The above-mentioned problem, however, can be overcome simply by, for example, shortening the frame period (T) or by increasing the number of edge portions in each frame pulse FP adaptively.

As explained above in detail, in the digital transmission system of the present invention, the timing recovery and the echo suppression can be performed with a high degree or accuracy without employing special hardware or using special algorithm.

## Claims

1. A digital transmission system operated under a full duplex communication mode, comprising:
   a single transmission line (30);
   at least one slave transmitting-receiving (T/R) unit (50) including
   a hybrid circuit (22) connected to said single transmission line (30), for transmitting signals to said single transmission line and at the same time for receiving signals from said transmission line;
   a timing control means (54);
   a first transmission control means (53); and
   a master transmitting-receiving unit (40) including
   a hybrid circuit (12) connected to said single transmission line (30), for transmitting signals to said single transmission line and at the same time for receiving signals from said transmission line;
   a second transmission control means (43,44); and
   a master clock source (18) for driving said master unit; characterized in that:
   each slave unit (50) includes an echo canceller (23) for cancelling an echo signal contained in the signal received from the associated hybrid circuit (22);
   the master unit (40) includes an echo canceller (13) for cancelling an echo signal contained in the signal received from the associated hybrid circuit (12),
   transmission by said second transmission control means (43,44) being made in a manner such that a frame pulse, a timing pulse, send data, and a non-signal duration period are issued sequentially in order to set up each frame, and an adjustment is initiated, during the generation of said frame pulse and timing pulse to be transmitted to said single transmission line (30), of said echo canceller (13) of the master transmitting- receiving unit (40);
   each slave T/R unit is driven by an internal clock and each timing control means (54) is arranged to synchronise said internal clock with the received frame pulse and then to initiate timing recovery with the received timing pulse to reproduce the received send data; and

   each first transmission control means (53) is arranged to inhibit transmission of a signal only during the reception of the frame pulse and the timing pulse from said master transmitting-receiving unit (40), to said single transmission line (30), and to initiate an adjustment, only during said non-signal duration period, of said echo canceller (23) of each slave transmitting-receiving unit.

2. A system as set forth in claim 1, wherein said slave side T/R unit (50) includes a synchronising circuit (56), a timing recovery circuit (27), an equaliser (25) and a discriminator (26), and in the slave side T/R unit (50), said timing recovery circuit (27) receives an output from said equaliser (25) performing line equalisation and produces an output clock which is the internal clock synchronised with the received signal, under control of said first transmission control means (54), and the synchronising circuit (56) receives an output from said discriminator (26) and generates control signals to be supplied to the first transmission control means (54), an output from the said discriminator (26) being a bit train of "1" and "0" determined in response to the output from said equaliser (25).

3. A system as set forth in claim 2, wherein said timing control means (54) of the slave side T/R unit (50) initiates line equalisation only during the reception of the frame pulse and the timing pulse supplied from the master side T/R unit (40).

4. A system as set forth in claim 2 or 3, wherein said timing recovery circuit comprises:
   upper side and lower side comparators (64,65) for jointly receiving the output from said equaliser (25) and providing outputs;
   an OR gate (66) for producing an OR'ed signal from the outputs from said comparators;
   an AND gate (67) which allows the OR'ed signal to pass therethrough when said clock window pulse is applied thereto; and
   a digital phase-locked loop circuit (68) for synchronising the internal clock with the timing pulse, thereby producing said output clock to be used as a basic clock in the slave side T/R unit.

5. A system as set forth in claim 2,3 or 4, wherein said synchronising circuit comprises:
   a frame pattern detecting circuit (61) for finding said frame pulse and producing a detection output;

a frame synchronisation back-up circuit (63) for receiving the detection output from the frame pattern detecting circuit and determining whether the detection has been accomplished; and

a frame synchronisation counter (62) which receives the detection output and counts a predetermined number of bits comprising each frame every time the detection is accomplished, so that correct establishment of frame synchronisation is communicated to the first sequence controller to issue a clock window pulse indicating the existence of said timing pulse.

6. A system as set forth in claim 1, wherein one of said T/R units works as a master side T/R unit (70) driven with the internal clock defined by a master clock source (18) and the other works as a slave side T/R unit (80) driven with the internal clock defined by a slave clock source in subordination to said master clock source.

said timing control means is incorporated in each of the slave side T/R units (80) and the master side T/R unit (70), respectively, as a first timing control means and a second timing control means, and

said first transmission control means is incorporated in the slave side T/R unit (80), and an identical second transmission control means is incorporated in the master side T/R unit (70).

7. A system as set forth in claim 1, wherein said first transmission control means is operable to start transmission of said send signal, in the form of the frame pulse, the send data, and the timing pulse arranged sequentially in order, after inhibiting a transmission of a slave T/R unit send signal only during a reception of said frame pulse and said timing pulse.

8. A system as set forth in claim 7, wherein each of said first and second transmission control means (53,54) is operable to create a non-signal duration period in each frame, the non-signal duration period inserted by the first transmission control means follows after the timing pulse, while the non-signal duration period inserted by the second transmission control means follows after the send data, where each non-signal duration period comprises a first duration period and a second duration period arranged in order, the first duration is equal to twice the transmission delay time produced during the transmission along said transmission line and the second duration is long enough to accept the timing pulse supplied from the other T/R unit.

9. A system as set forth in claim 8, wherein said master T/R unit (40) further comprises a second timing control means, said second timing control means performs a timing recovery with the use of the received timing pulse supplied from the slave side T/R unit during said second duration period of said non-signal duration period.

10. A system as set forth in claim 9, wherein said master side T/R unit (40) includes an echo canceller (13) and said second timing control means initiates an adaptive adjustment of said echo canceller in the master side T/R unit using the frame pulse and the timing pulse generated from the master side.

11. A system as set forth in claim 10, wherein said first timing control means is operative to initiate an adaptive adjustment of an echo canceller in the slave side T/R unit with the use of the timing pulse generated from own side.

12. A system as set forth in claim 11, wherein said first transmission control means in the slave side T/R unit (80) is comprised of a first sequence controller (54) and the first selector (53) is controlled by the first sequence controller (54) such that the frame pulse, the send data, the timing pulse and the non-signal duration part are issued in this order,

said second transmission control means in the master side T/R unit (70) is comprised of a second sequence controller (44) and the second selector (43) is controlled by the second sequence controller (44) such that the frame pulse, the timing pulse, the send data and the non-signal duration part are issued in this order,

said first timing control means in the slave side T/R unit (80) is formed as a part of said first sequence controller (54), and

said second timing control means in the master side T/R unit (70) is formed as a part of said second sequence controller (44).

13. A system as set forth in claim 12, wherein each of said first and second sequence controllers (44,54) made of a read only memory (ROM) which stores therein various data specifying the respective control sequences.

14. A system as set forth in claim 11, wherein, in the master side T/R unit (70), said second timing control means is further operative to perform said timing recovery with the use of, other than the received timing pulse, the received data appearing in said first duration of the non-signal duration followed after said send data of own side.

15. A system as set forth in claim 1, wherein said master side T/R unit (70) employs a phase component extraction means to be cooperated with a usual timing recovery circuit of the master side, and said slave side T/R unit (80) employs a frequency component extraction means to be cooperated with a usual timing recovery circuit of the slave side.

16. A system as set forth in claim 15, wherein said frequency component extraction means of the slave side T/R unit (80) is operative to extract the frequency component from the received signal given from the master side T/R unit (70) so as to synchronise in frequency and phase the internal clock of the slave side T/R unit (80) with the received signal with the aid of said timing recovery circuit of the slave side and then return the thus synchronised signal, as a phase adjusting signal, to the master side T/R unit,

the phase extraction means of the master side T/R unit (70) is operative to synchronise in phase the internal clock of the master side with the thus given phase adjusting signal with the aid of the timing recovery circuit of the master side, only during generation of a training signal in the master side which is used for initiating the own side timing recovery operation every time the data transmission is to be started.

17. A system as set forth in claim 16, wherein, in the master side T/R unit (70), said phase extraction means and said timing recovery circuit is formed as a single circuit comprising: a first frequency divider (130) operative to receive the master clock and produce frequency divided output pulses having a different phase with each other; a selector (131) operative to provide either one of said output pulses in accordance with a selection signal given from a second frequency divider (135); a differentiation circuit (134) operative to produce a differentiated output in response to an input applied thereto; a switch (137) operative to be placed on to allow the input, given to the differentiation circuit (134) to pass therethrough under control of said training signal, which input is the output signal supplied from a usual discriminator of the master side, which discriminator functions to produce logic "1" and "0" in response to the received signal; a first AND gate (136) receiving, at its first input, the differentiated output; a second AND gate (132) receiving, at its first input, the resultant output from said first AND gate (136) and, at its output, said output pulse selected by said selector; and a third frequency divider (133) operative to receive the resultant output from said second AND gate (132) to provide the frequency divided output pulse, on one hand, to a second input of said first AND gate (136), and on the other hand, used as the master side internal clock.

18. A system as set forth in claim 1, wherein said second transmission control means in the master side T/R unit is operative to transmit a frame pulse and a send data sequentially in this order to set up each frame, while, in the slave side T/R unit, a frame synchronisation is performed with the use of the thus transmitted frame pulse and then said timing control means initiates a timing recovery with the use of also the thus transmitted frame pulse to reproduce the thus transmitted send data, as a received data, at the same time, said second transmission control means in the slave side T/R unit operates to inhibit a transmission of the own side send signal to be given to the master side T/R unit only during a reception of said frame pulse given from the master side T/R unit.

19. A system as set forth in claim 18, wherein in the T/R receiving unit said frame pulse performs said frame synchronisation and said timing recovery, by means of a single circuit comprising: an upper side and a lower side comparator (64,65) jointly receiving the output from a usual equaliser (25) of the own side which performs a line equalisation; an OR gate (66) for producing the OR'ed signal with respect to both compared outputs from said comparators; a flip-flop (151) operative to momentarily hold logic "1" or "0" of the OR'ed output in synchronism with the internal clock; a frame synchronising circuit (152) operative to produce a frame pulse detection signal and further create a clock window pulse based on the thus produced frame pulse detection signal; an AND gate (67) receiving, at its first input, said clock window pulse and, at its second input, said OR'ed output, so as to allow the edge portion of the frame pulse to pass therethrough; a delay circuit (153) operative to shift the phase of the thus passed edge portion such that the phase shifted edge portion can take each center portion of the received data; and a digital phase-locked loop (D•PLL) circuit (68) operative to produce the output clock, as the own side internal clock, which is controlled in phase by said phase shifted edge portion.

20. A system as set forth in claim 6, wherein said second transmission control means in the master side T/R unit is operative to transmit a frame pulse and a send data sequentially in this order to set up each frame, and, in the slave side T/R unit, a frame synchronisation is performed with the use of the thus transmitted frame pulse and then said first timing control means initiates a timing recovery with the use of also the thus transmitted frame pulse to reproduce the thus transmitted send data, as a received data, at the same time, said first transmission control means of the slave side T/R unit is operative to, first, inhibit a transmission of the own side send signal to be given to the master side T/R unit only during reception of said frame pulse given from the master side T/R unit, and thereafter the first transmission control means is operative to start a transmission of said send signal, in the form of a frame pulse and a send data arranged sequentially in this order.

21. A system as set forth in claim 20, wherein in the T/R receiving unit said frame pulse performs said frame synchronisation and said timing recovery, by means of a single circuit comprising: both upper side and lower side comparators (64,65) both jointly receiving the output from a usual equaliser (25) of the own side which performs a line equalisation; an OR gate (66) for producing the OR'ed signal with respect to both compared outputs from said comparators; a flip-flop (151) operative to momentarily hold logic "1" or "0" of the OR'ed output in synchronism with the internal clock; a frame synchronising circuit (152) operative to produce a frame pulse detection signal and further create a clock window pulse based on the thus produced frame pulse detection signal; an AND gate (67) receiving, at its first input, said clock window pulse and, at its second input, said OR'ed output, so as to allow the edge portion of the frame pulse to pass therethrough; a delay circuit (153) operative to shift the phase of the thus passed edge portion such that the phase shifted edge portion can take each center portion of the received data; and a digital phase-locked loop (D•PLL) circuit (68) operative to produce the output clock, as the own side internal clock, which is controlled in phase by said phase shifted edge portion.

**Revendications**

1. Système de transmission numérique fonctionnant dans un mode de communication dit "full" duplex", et comprenant
   - une ligne de transmission (30) unique ;
   - au moins une unité terminale de transmission/ réception esclave (50) comprenant :
     - un circuit hybride (22) connecté à ladite ligne de transmission unique (30) pour transmettre des signaux sur la dite ligne de transmission unique et en même temps pour recevoir des signaux de réception provenant de la dite ligne de transmission ;
     - des moyens de contrôle du séquencement ou d'horloge (54) ;
     - des premiers moyens de contrôle de séquencement ou d'horloge (53) ; et
   - une unité terminale de transmission/ réception maître (40) comprenant :
     - un circuit hybride (12) connecté à ladite ligne de transmission unique (30) pour transmettre des signaux sur la dite ligne de transmission unique et en même temps pour recevoir des signaux de réception provenant de la dite ligne de transmission ;
     - des seconds moyens de contrôle de transmission (43, 44) et
     - une source d'horloge maître (18) pour piloter ladite unité maître ;
       caractérisé en ce que :
   - chaque unité esclave (50) comporte un annuleur d'écho (23) pour annuler un signal d'écho contenu dans le signal reçu du circuit hybride associé (22) ;
   - l'unité maitre (40) comporte un annuleur d'écho (13) pour annuler un signal d'écho contenu dans le signal reçu du circuit hybride associé (12),
   - une transmission par lesdits seconds moyens de contrôle de transmission (43, 44) étant faite d'une manière telle qu'une impulsion de trame, une impulsion de séquencement ou d'horloge, des données d'émission et une période de durée de non signal (sans signal) sont délivrées séquentiellement afin de régler chaque trame et un réglage est initié durant la génération de ladite impulsion de trame et de l'impulsion d'horloge à transmettre à ladite ligne de transmission unique (30), dudit annuleur d'écho (13) de l'unité terminale de transmission/ réception maître (40) ;
   - chaque unité terminale de transmission/ réception esclave est pilotée par une horloge interne et les moyens de contrôle du séquencement (54) sont arrangés de façon à synchroniser ladite horloge interne avec l'impulsion de trame reçue et ensuite d'initier la restauration du séquencement avec l'impulsion de séquencement reçu de façon à reproduire les données d'émission reçues ; et

- les premiers moyens de contrôle de transmission (53) sont arrangés de façon à inhiber la transmission d'un signal seulement pendant la réception de l'impulsion de trame et de l'impulsion de séquencement provenant de ladite unité terminale de transmission/ réception maître (40) à ladite ligne de tranmission unique (30), et pour initier un réglage, pendant la seule période de durée de non signal (ou de signal nul) dudit annuleur d'écho (23) de l'unité ou de chaque unité terminale de transmission/ réception esclave.

2. Système selon la revendication 1, dans lequel ladite unité terminale de Transmission/ Réception esclave (50) comporte un circuit de synchronisation (56), un circuit de restauration d'horloge (27), un égaliseur (25) et un discriminateur (26), et dans l'unité terminale de Transmission/ Réception esclave (50), ledit circuit (27) de restauration d'horloge reçoit une sortie dudit égaliseur (25) pour exécuter une égalisation de ligne et produire une horloge de sortie qui est l'horloge interne synchronisée sur le signal de réception, sous le contrôle des dits moyens de contrôle de transmission (54), et en ce que le circuit de synchronisation (56) reçoit une sortie dudit discriminateur (26) et génère des Signaux de contrôle à fournir au premier moyen de contrôle de transmission (54), une sortie dudit discriminateur (26) étant constituée par un train de bits de "1" et de "0" déterminé en réponse à la sortie dudit égaliseur (25).

3. système selon la revendication 2, dans lequel desdits moyens de contrôle de séquencement (54) de l'unité terminale de Transmission/ Réception esclave (50) initialise l'égalisation de ligne seulement pendant la réception de l'impulsion de trame et pendant l'impulsion d'horloge fournie par l'unité terminale de Transmission/ réception maître (40).

4. Système selon l'une des revendications 2 ou 3, dans lequel ledit circuit de restauration d'horloge comporte :

- des comparateurs (64) et (65) de côté supérieur et de côté inférieur pour recevoir de façon conjointe la sortie dudit égaliseur (25) et pour en fournir des sorties ;
- une porte OU (66) pour produire un signal de combinaison en OU logique entre les sorties des dits comparateur ;
- une porte ET (67) qui autorise le signal comoiné en OU logique à le traverser quand ladite impulsion de fenêtre d'horloge lui est appliquée ; et
- un circuit (68) numérique à boucle à verrouillage de phase pour synchroniser l'horloge interne sur l'impulsion d'horloge, de façon à produire ladite horloge de sortie qui doit être utilisée comme horloge principale dans l'unité terminale de Transmission/ Réception esclave.

5. Système selon la revendication 2, 3 ou 4, dans lequel ledit circuit de synchronisation comporte :

- un circuit (61) détecteur des séquences de trame pour trouver ladite impulsion de trame et produire une sortie de détection ;
- un circuit (63) de sauvegarde de synchronisation de trame pour recevoir la sortie de détection provenant du circuit détecteur de séquence de trame et déterminer si la détection a été accomplie ; et
- un compteur (62) de synchronisation de trame qui reçoit la sortie de détection et compte un nombre prédéterminé de bits comprenant chaque trame, à chaque fois que la détection est accomplie, de telle sorte que l'établissement de la synchronisation de trame est transmis ou communiqué au premier contrôleur de séquence pour produire une impulsion de fenêtre d'horloge indiquant l'existence de ladite impulsion d'horloge ou de séquencement.

6. Système selon la revendication 1, dans lequel l'une des dites unités T/R travaille comme unité terminale de Transmission/ réception maître (70) pilotée par l'horloge interne définie par une source (18) d'horloge maître et dans lequel l'autre unité travaille comme unité terminale de Transmission/ Réception esclave (90) pilotée par l'horloge interne définie par une source d'horloge esclave sous le contrôle de ladite source d'horloge maître ;

- lesdits moyens de contrôle de séquencement sont incorporés dans chacune des unité terminale de Transmission/ Réception esclave (80) et unité terminale de Transmission/ réception maître (70), respectivement, comme premiers moyens de contrôle de séquencement et seconds moyens de contrôle de séquencement, et

- lesdits premiers moyens de contrôle de la transmission sont incorporés dans l'unité terminale de Transmission/ Réception esclave (80), et des seconds moyens de contrôle de transmission identiques sont incorporées dans l'unité terminale de Transmission/ réception maître (70).

7. Système selon la revendication 1, dans lequel lesdits premiers moyens de transmission fonctionnent de façon à démarrer la transmission dudit signal d'émission sous la forme de l'impulsion de trame, les données d'émission et l'impulsion de séquencement ou d'horloge arrangées séquentiellement en ordre, après avoir inhibé la transmission d'un signal d'émission d'une unité terminale de Transmission/ Réception esclave seulement pendant la durée de réception de ladite impulsion de trame et de ladite impulsion d'horloge ou de séquencement.

8. Système selon la renvendication 7, dans lequel chacun desdits premiers et seconds moyens de contrôle de transmission (53, 54) fonctionnent de façon à créer une période de durée de non signal à chaque trame, en ce que la période de durée de non signal insérée par les premiers moyens de contrôle de transmission suit l'impulsion de séquencement, alors que la période de durée de non signal insérée par les seconds moyens de contrôle de transmission suit les données d'émission, où chaque période de durée de non signal comporte une première période de durée et une seconde période de durée arrangées dans cet ordre, la première durée étant égale à deux fois le temps de retard de transmission produit pendant la transmission le long de ladite ligne de transmission, et la seconde durée étant suffisamment longue pour accepter l'impulsion d'horloge ou de séquencement fournie par l'autre unité T/R.

9. Système selon la revendication 8, dans laquelle ladite unité terminale de Transmission/ réception maître (40) comporte de plus des seconds moyens de contrôle de séquencement, lesdits seconds moyens de contrôle de séquencement exécutant une restauration d'horloge en utilisant l'impulsion de séquencement ou d'horloge reçue fournie par l'unité terminale de Transmission/ Réception esclave pendant ladite seconde période de durée de ladite période de durée de non signal.

10. Système selon la revendication 9, dans lequel ladite unité terminale de Transmission/ réception maître (40) comporte un annuleur d'écho (13) et lesdits seconds moyens de contrôle de séquencement initialisent un réglage adaptatif dudit annuleur d'écho sur l'unité terminale de Transmission/ réception maître en utilisant l'impulsion de trame et l'impulsion de séquencement générées par le côté maître.

11. Système selon la revendication 10, dans lequel lesdits premiers moyens de contrôle de séquencement fonctionnent de façon à initier un réglage adaptatif de l'annuleur d'écho dans l'unité terminale de Transmission/ Réception esclave en utilisant l'impulsion d'horloge ou de séquencement générée de ce côté-là.

12. Système selon la revendication 11, dans lequel lesdits premiers moyens de contrôle de transmission dans l'unité terminale de Transmission/ Réception esclave (80) comprennent un premier contrôleur de séquence (54) et en ce que le premier sélecteur (53) est contrôlé par le premier contrôleur de séquence (54) de telle sorte que l'impulsion de trame, les données d'émission, l'impulsion de séquencement ou d'horloge et la partie de durée de non-signal sont fournies dans cet ordre,

- lesdits seconds moyens de contrôle de transmission dans l'unité terminale de Transmission/ réception maître (70) comportent un second contrôleur de séquence (44) et en ce que le second sélecteur (43) est contrôlé par le second contrôleur de séquence (44) de telle sorte que l'impulsion de trame, l'impulsion de séquencement ou d'horloge, les données d'émission et la partie de durée de non-signal sont fournies dans cet ordre,
- lesdits premiers moyens de contrôle de séquencement dans l'unité terminale de Transmission/ Réception esclave (80) constituant une partie dudit premier contrôleur de séquence (54), et
- lesdits seconds moyens de contrôle de séquencement dans l'unité terminale de Transmission/ réception maître (70) formant une partie dudit second contrôleur de séquence (44).

13. Système selon la revendication 12, dans lequel chacun desdits premier et second contrôleurs de séquence (44, 54) sont constitués d'une mémoire à lecture seule (ROM) dans laquelle sont stockées diverses données spécifiant les séquences respectives de contrôle.

14. Système selon la revendication 11, dans lequel, dans l'unité terminale de Transmission/ réception maître (70), lesdits seconds moyens de contrôle de séquencement fonctionnent de plus de façon à exécuter ladite restauration d'horloge en utilisant, sauf l'impulsion de séquencement reçue, les données reçues apparaissant dans ladite première durée de non-signal qui suit après lesdites données d'émission de ce côté-là.

15. Système selon la revendication 1, dans lequel ladite unité terminale de Transmission/ réception maître (70) utilise des moyens d'extraction d'une composante de phase à associer avec un circuit usuel de restauration d'horloge du côté maître, et ladite unité terminale de Transmission/ Réception esclave (80) utilise des moyens d'extraction d'une composante de fréquence à associer avec un circuit usuel de restauration d'horloge du côté esclave.

16. Système selon la revendication 15, dans lequel lesdits moyens d'extraction d'une composante de fréquence de l'unité terminale de Transmission/ Réception esclave (80) fonctionnent de façon à extraire la composante de fréquence du signal reçu fourni par l'unité terminale de Transmission/ réception maître (70) de façon à synchroniser en fréquence et en phase l'horloge interne de l'unité terminale de Transmission/ Réception esclave (80) sur le signal reçu avec l'aide dudit circuit de restauration d'horloge du côté esclave et retourne ensuite le signal ainsi synchronisé, comme signal de réglage de phase, à l'unité terminale de Transmission/ réception maître (70),
- les moyens d'extraction de phase de l'unité terminale de Transmission/ réception maître (70) fonctionnant de façon à synchroniser en phase l'horloge interne du côté maître sur le signal de réglage de phase ainsi fourni, avec l'aide du circuit de restauration d'horloge du côté maître, pendant la seule génération d'un signal d'apprentissage sur le côté maître qui est utilisé pour initialiser le fonctionnement en restauration d'horloge de ce côté-là chaque fois que la transmission des données démarre.

17. Système selon la revendication 16, dans lequel, dans l'unité terminale de Transmission/ réception maître (70), lesdits moyens d'extraction de phase et ledit circuit de restauration d'horloge sont associés en un seul circuit comprenant : un premier diviseur de fréquence (130) fonctionnant de façon à recevoir l'horloge maître et de façon à produire des impulsions de sortie divisée en fréquence présentant une phase différente les unes des autres ; un sélecteur (131) fonctionnant de façon à fournir l'une ou l'autre desdites impulsion de sortie en fonction d'un signal de sélection fourni par un second diviseur de fréquence (135) ; un circuit différenciateur (134) fonctionnant de façon à produire une sortie de différentiation en réponse à une entrée qui lui est fournie ; un commutateur (137) fonctionnant de façon à être ouvert pour autoriser l'entrée fournie au cicuit différentiateur (134), pour qu'elle le traverse sous le contrôle dudit signal d'apprentissage, laquelle entrée est le signal de sortie fourni par un discriminateur usuel du côté maître, lequel discriminateur fonctionne de façon à produire des niveaux logiques "1" et "0" en réponse au signal reçu ; une première porte ET (136) recevant à sa première entrée, la sortie de différentiation ; une seconde porte ET (132) recevant à sa première entrée, la sortie résultant de ladite première porte ET (136) et, à sa sortie, ladite impulsion de sortie sélectionnée par ledit sélecteur ; et une troisième diviseur de fréquence (133) fonctionnant de façon à recevoir la sortie résultante provenant de ladite seconde porte ET (132) de façon à fournir les impulsions de sortie divisée en fréquence, d'une part, à une seconde entrée de ladite première porte ET (136), et d'autre part, utilisées comme horloge interne du côté maître.

18. Système selon la revendication 1, dans lequel lesdits seconds moyens de contrôle de transmission dans l'unité terminale de Transmission/ réception maître fonctionnent de façon à transmettre une impulsion de trame et des données d'émission séquentiellement dans cet ordre pour initier chaque trame, alors que, dans l'unité terminale de Transmission/ Réception esclave, une synchronisation de trame est exécutée en utilisant l'impulsion de trame ainsi transmise et ensuite en ce que lesdits moyens de contrôle de séquencement initialisent une restauration d'horloge en utilisant aussi l'impulsion de trame ainsi transmise pour reproduire les données d'émission ainsi transmise, comme données de réception, en même temps, lesdits seconds moyens de contrôle de transmission dans l'unité terminale de Transmission/ Réception esclave fonctionnant de façon à inhiber la transmission de ce signal d'émission-là pour les fournir à l'unité terminale de Transmission/ réception maître seulement pendant la réception de ladite impulsion de trame fournie par l'unité terminale de Transmission/ réception maître.

19. Système selon la revendication 18, dans lequel ladite impulsion de trame dans l'unité de réception T/R exécute ladite synchronisation de trame et ladite restauration d'horloge au moyen d'un circuit unique comprenant un comparateur de côté inférieur et un comparateur de côté supérieur (64, 65) recevant de manière jointe la sortie d'un égaliseur usuel (25) de ce côté- là qui exécute une égalisation de ligne ; une porte OU (66) pour produire le signal combiné par un OU logique sur les deux sorties comparées desdits comparateurs ; une bascule FF flip-flop (151) fonctionnant de façon à maintenir momentanément un niveau logique "1" ou "0" de la sortie combinée en OU logique en synchronisation avec l'horloge interne ; un circuit de synchronisation de trame (152) fonctionnant de façon à produire un signal de détection d'impulsion de trame et de plus à créer une impulsion de fenêtre d'horloge basée sur le signal de détection de l'impulsion de trame ainsi produite ; et une porte ET (67) recevant, sur sa première entrée, ladite impulsion de fenêtre d'horloge et, à sa seconde entrée, ladite sortie combinée par un OU logique, de façon à permettre à la partie de bord de l'impulsion de trame de la traverser ; un circuit à retard (153) fonctionnant de façon à décaler la phase de la partie de bord ainsi transmise de telle sorte que la partie de bord à phase décalée puisse atteindre chaque partie centrale des données de réception ; et un circuit (68) (D.PLL) numérique à boucle à verrouillage de phase fonctionnant de façon à produire l'horloge de sortie, comme horloge interne de ce côté-là, et qui est commandé en phase par ladite partie de bord à phase décalée.

20. Système selon la revendication 6, dans lequel lesdits seconds moyens de contrôle de transmission dans l'unité terminale de Transmission/ réception maître fonctionnent de façon à transmettre une impulsion de trame et des données d'émission séquentiellement dans cet ordre de façon à initier chaque trame, et, dans l'unité terminale de Transmission/ Réception esclave, en ce qu'une synchronisation de trame est exécutée en utilisant l'impulsion de trame ainsi transmise et ensuite, en ce que lesdits premiers moyens de contrôle de séquencement initient une restauration d'horloge en utilisant aussi l'impulsion de trame ainsi transmise de façon à reproduire les données d'émission ainsi transmises, comme données reçues, en même temps, lesdits premiers moyens de contrôle de transmission de l'unité terminale de Transmission/ Réception esclave fonctionnent de façon à premièrement, inhiber la transmission du signal d'émission de ce côté-là, à fournir à l'unité terminale de Transmission/ réception maître pendant la seule réception de ladite impulsion de trame fournie par l'unité terminale de Transmission/ réception maître, et ensuite, en ce que les premiers moyens de contrôle de transmission fonctionnent de façon à démarrer la transmission dudit signal d'émission sous la forme d'une impulsion de trame et de données d'émission disposées séquentiellement dans cet ordre.

21. Système selon la revendication 20, dans lequel dans l'unité de réception T/R, ladite impulsion de trame exécute ladite synchronisation de trame et ladite restauration d'horloge au moyen d'un circuit unique comprenant : à la fois des comparateurs de côtés supérieur et inférieur (64, 65) recevant de manière jointe tous les deux de ce côté-là la sortie d'un égaliseur usuel (25) qui exécute une égalisation de ligne une porte OU (66) pour produire le signal combiné en OU logique à partir des deux sorties comparées provenant desdits comparateurs ; une bascule flip-flop (151) fonctionnant de façon à maintenir momentanément un niveau logique "1" ou "0" de la sortie combinée en OU logique en synchronisme avec l'horloge interne ; un circuit de synchronisation de trame (152) fonctionnant de façon à produire un signal de détection d'impulsion de trame et à créer de plus une impulsion de fenêtre d'horloge basée sur le signal de détection d'impulsion de trame ainsi produit ; une porte ET (67) recevant, à sa première entrée, ladite impulsion de fenêtre d'horloge et, à sa seconde entrée, ladite sortie combinée en OU logique, de façon à permettre à ce que la partie de bord de l'impulsion de trame la traverse ; un circuit à retard (153) fonctionnant de façon à décaler la phase de la partie de bord ainsi transmise de telle sorte que la partie de bord décalée en phase puisse atteindre chaque partie centrale des données de réception ; et un circuit (68) (D.PLL) numérique à boucle à verrouillage de phase fonctionnant de façon à produire l'horloge de sortie, comme horloge interne de ce côté-là, et qui est régulé ou contrôlé en phase par ladite partie de bord

décalée en phase.

## Ansprüche

1. Digitales Übertragungssystem, welches in einem Vollduplex-Kommunikationsmodus betrieben wird, umfassend:

   eine einzelne Übertragungsleitung (30);

   wenigstens eine Neben-Sende/Empfangs-(TR)-Einheit (50), enthaltend

   eine Hybridschaltung (22), die an die einzelne Übertragungsleitung (30) angeschlossen ist, um Signale zu der einzelnen Übertragungsleitung zu übertragen und zur gleichen Zeit Signale von der Übertragungsleitung zu empfangen;

   eine Zeitgeber-Steuerungseinrichtung (54);

   eine erste Übertragungs-Steuerungseinrichtung (53); und

   eine Haupt-Sende/Empfangs-Einheit (40), welche

   einen Hybridschaltkreis (12) einschließt, welcher mit der einzelnen Übertragungsleitung (30) verbunden ist, um Signale zu der einzelnen Übertragungsleitung zu senden, und gleichzeitig Signale von der Übertragungsleitung zu empfangen;

   eine zweite Übertragungs-Steuerungseinrichtung (43, 44); und

   eine Haupt-Taktquelle (18), um die Haupt-Einheit zu steuern; dadurch **gekennzeichnet, daß**

   jede Neben-Einheit (50) einen Echo-Löscher (23) einschließt, um ein in dem von dem zugeordneten Hybridschaltkreis (22) empfangenen Signal enthaltenes Echosignal zu löschen;

   die Haupt-Einheit (40) einen Echo-Löscher (13) einschließt, um ein in dem von dem zugeordneten Hybridschaltkreis (12) empfangenen Signal enthaltenes Echo zu löschen,

   wobei die Übertragung von der zweiten Übertragungs-Steuerungseinrichtung (43, 44) in solch einer Weise durchgeführt wird, daß ein Rahmen-Impuls, ein Zeitgeber-Impuls, Sendedaten, und eine Kein-Signal-Periodenlänge sequentiell ausgegeben werden, um jeden Rahmen aufzubauen, und ein Abgleich des Echo-Löschers (13) der Haupt-Sende/Empfangs-Einheit (40) während der Erzeugung des Rahmen-Impulses und des Zeitgeber-Impulses bewirkt wird, welche zu der einzelnen Übertragungsleitung (30) übertragen werden sollen;

   jede Neben-Sende/Empfangs-Einheit von einem internen Takt gesteuert wird, und jede Zeitgeber-Steuereinrichtung (54) ausgebildet ist, den internen Takt mit dem empfangenen Rahmen-Impuls zu synchronisieren, und dann mit dem empfangenen Zeitgeber-Impuls eine Zeitgeber-Wiedergewinnung zu bewirken, um die empfangenen Sendedaten zu reproduzieren; und

   jede erste Übertragungs-Steuereinrichtung (53) angeordnet ist, eine Übertragung eines Signals nur während des Empfangs des Rahmen-Impulses und des Zeitgeber-Impulses von der Haupt-Sende/Empfangs-Einheit (40) zu der einzelnen Übertragungsleitung (30) zu unterbinden und einen Abgleich des Echo-Löschers (23) von jeder Neben-Sende/Empfangs-Einheit nur während der Kein-Signal-Periodenlänge zu bewirken.

2. System nach Anspruch 1, dadurch **gekennzeichnet,** daß die Neben-Sende/Empfangs-Einheit (50) einen Synchronisierschaltkreis (56), einen Zeitgeber-Wiedergewinnungsschaltkreis (27), einen Entzerrer (25) und einen Diskriminator (26) einschließt, und in der Neben-Sende/Empfangseinheit (50) der Zeitgeber-Wiedergewinnungsschaltkreis (27) eine Ausgabe von dem Entzerrer (25), welcher Leitungsentzerrung durchführt, empfängt, und einen Ausgangstakt erzeugt, welcher der mit dem empfangenen Signal synchronisierte interne Takt ist, unter Steuerung durch die erste Übertragungs-Steuerungseinrichtung (54), und der Synchronisierschaltkreis (56) eine Ausgabe von dem Diskriminator (26) empfängt, und Steuersignale erzeugt, welche an die erste Übertragungs-Steuerungseinrichtung (54) geliefert werden, wobei eine Ausgabe von dem Diskriminator (26) eine Bitfolge von "1" und "0" ist, die auf die Ausgabe von dem Entzerrer (25) hin bestimmt wird.

3. System nach Anspruch 2, dadurch **gekennzeichnet,** daß die Zeitgeber-Steuerungseinrichtung (54) der Neben-Sende/Empfangseinheit (50) Leitungsentzerrung nur während des Empfangs des Rahmen-Impulses und des Zeitgeber-Impulses bewirkt, die von der Haupt-Sende/Empfangseinheit (40) geliefert werden.

4. System nach Anspruch 2 oder 3, dadurch **gekennzeichnet,** daß der Zeitgeber-Wiedergewinnungsschaltkreis umfaßt:

   Oberschwellen- und Unterschwellen-Komparatoren (64, 65), um gemeinsam das Ausgangssignal von dem Entzerrer (25) zu empfangen, und Ausgangssignale zu liefern;

ein ODER-Gatter (66), um ein ODER-verknüpftes Signal von den Ausgängen der Komparatoren zu erzeugen;

ein UND-Gatter (67), welches dem ODER-verknüpften Signal erlaubt, zu passieren, wenn der Takt-Fensterimpuls darauf gegeben wird; und

einen digitalen Phasenverriegelungsschaltkreis (PLL) (68), um den internen Takt mit dem Zeitgeber-Impuls zu synchronisieren, und dadurch den Ausgangstakt zu erzeugen, welcher als ein Basistakt in der Neben-Sende/Empfangseinheit verwendet wird.

5. System nach Anspruch 2, 3 oder 4, dadurch **gekennzeichnet,** daß der Synchronisationsschaltkreis umfaßt:

einen Rahmenmuster-Detektionsschaltkreis (61) zum Auffinden des Rahmen-Impulses und zum Erzeugen einer Detektions-Ausgabe;

einen Rahmensynchronisations-Sicherheitsschaltkreis (36), um die Detektionsausgabe von dem Rahmen muster-Detektionsschaltkreis zu empfangen und zu bestimmen, ob die Detektion abgeschlossen worden ist; und

einen Rahmen-Synchronisationszähler (62), welcher die Detektionsausgabe empfängt und eine vorbestimmte Anzahl von Bits, die in jedem Rahmen enthalten sind, jedesmal, wenn die Detektion abgeschlossen ist, zählt, so daß ein korrekter Aufbau der Rahmensynchronisation der ersten Abfolgesteuerung mitgeteilt wird, um einen Takt-Fensterimpuls auszugeben, welcher die Existenz des Zeitgeber-Impulses anzeigt.

6. System nach Anspruch 1, dadurch **gekennzeichnet,** daß eine der Sende/Empfangseinheiten als eine Haupt-Sende/Empfangseinheit (70) arbeitet, die mit dem von einer Haupt-Taktquelle (18) festgelegten internen Takt betrieben wird, und die andere als eine Neben-Sende/Empfangseinheit (80) arbeitet, die mit dem von einer Neben-Taktquelle in Unterordnung unter die Haupt-Taktquelle definierten internen Takt betrieben wird;

die Zeitgeber-Steuerungseinrichtung in jede der Neben-Sende/Empfangseinheiten (80) bzw. der Haupt-Sende/Empfangseinheit (70) eingegliedert ist als eine erst Zeitgeber-Steuerungseinrichtung und eine zweite Zeitgeber-Steuerungseinrichtung, und

die erste Übertragungs-Steuerungseinrichtung in der Slave-Sende/Empfangseinheit (80) eingegliedert ist und eine identische zweite Übertragungs-Steuerungseinrichtung in die Haupt-Sende/Empfangseinheit (70) eingegliedert ist.

7. System nach Anspruch 1, dadurch **gekennzeichnet,** daß die erste Übertragungs-Steuerungseinrichtung betreibbar ist, die Übertragung des Sendesignals in der Form des Rahmenimpulses, der Sendedaten und des Zeitgeber-Impulses, die sequentiell in der Reihenfolge angeordnet sind, zu starten, nachdem eine Übertragung eines Sendesignals von einer Neben-Sende/Empfangseinheit nur während eines Empfangs des Rahmen-Impulses und des Zeitgeber-Impulses unterbunden worden ist.

8. System nach Anspruch 7, dadurch **gekennzeichnet,** daß jede der ersten und zweiten Übertragungs-Steuerungseinrichtungen (53, 54) betreibbar ist, eine Kein-Signal-Periodenlänge in jedem Rahmen zu erzeugen, die von der ersten Übertragungs-Steuerungseinrichtung eingefügte Kein-Signal-Periodenlänge auf den Zeitgeber-Impuls folgt, während die von der zweiten Übertragungs-Steuerungseinrichtung eingefügte Kein-Signal-Periodenlänge auf die Sendedaten folgt, wobei jede Kein-Signal-Periodenlänge und eine zweite Periodenlänge umfaßt, die in Reihenfolge angeordnet sind, die erste Länge gleich dem Doppelten der während der Übertragung entlang der Übertragungsleitung hervorgerufenen Übertragungsverzögerung ist, und die zweite Länge lang genug ist, den von der anderen Sende-/Empfangseinheit gelieferten Zeitgeber-Impuls aufzunehmen.

9. System nach Anspruch 8, dadurch **gekennzeichnet,** daß die Haupt-Sende/Empfangseinheit (40) ferner eine zweite Zeitgeber-Steuerungseinrichtung umfaßt, und die zweite Zeitgeber-Steuerungseinrichtung eine Zeitgeber-Wiedergewinnung unter Verwendung des empfangenen Zeitgeberimpulses durchführt, der von der Neben-Sende/Empfangseinheit während der zweiten Periodenlänge der Kein-Signal-Periodenlänge geliefert wird.

10. System nach Anspruch 9, dadurch **gekennzeichnet,** daß die Haupt-Sende/Empfangseinheit (40) einen Echolöscher (13) einschließt und die zweite Zeitgeber-Steuerungseinrichtung einen adaptiven Abgleich des Echolöschers in der Haupt-Sende/Empfangseinheit unter Verwendung des von der Haupt-Seite erzeugten Rahmen-Impulses und Zeitgeber-Impulses bewirkt.

**11.** System nach Anspruch 10,
dadurch **gekennzeichnet,** daß die erste Zeitgeber-Steuerungseinrichtung betreibbar ist, einen adaptiven Abgleich eines Echolöschers in der Neben-Sende/Empfangseinheit unter Verwendung des auf dieser Seite erzeugten Zeitgeberimpulses zu bewirken.

**12.** System nach Anspruch 11,
dadurch **gekennzeichnet,** daß die erste Übertragungssteuerungseinrichtung in der Neben-Sende/Empfangseinheit (80) eine erste Folge-Steuerein richtung (54) umfaßt und der erste Wähler (53) von der ersten Folge-Steuereinrichtung (54) gesteuert wird, so daß der Rahmen-Impuls, die Sendedaten, der Zeitgeber-Impuls und der Kein-Signal-Längenanteil in dieser Reihenfolge ausgegeben werden,
die zweite Übertragungssteuerungseinrichtung in der Haupt-Sende/Empfangseinheit (70) eine zweite Folge-Steuereinrichtung (44) umfaßt, und der zweite Wähler (43) von der zweiten Folge-Steuereinrichtung (44) so gesteuert wird, daß der Rahmen-Impuls, der Zeitgeber-Impuls, die Sendedaten und der Kein-Signal-Längenanteil in dieser Reihenfolge ausgegeben werden,
die erste Zeitgeber-Steuerungseinrichtung in der Neben-Sende/Empfangseinheit (80) als ein Teil der ersten Folge-Steuereinrichtung (54) gebildet ist, und
die zweite Zeitgeber-Steuerungseinrichtung in der Haupt-Sende/Empfangseinheit (70) als ein Teil der zweiten Folge-Steuereinrichtung (44) gebildet ist.

**13.** System nach Anspruch 12,
dadurch **gekennzeichnet,** daß jede der ersten und zweiten Folge-Steuereinrichtungen (44, 54) aus einem Nur-Lese-Speicher (ROM) gebildet sind, welcher verschiedene Daten, die die jeweiligen Steuersequenzen spezifizieren, speichert.

**14.** System nach Anspruch 11,
dadurch **gekennzeichnet,** daß in der Haupt-Sende/Empfangseinheit (70) die zweite Zeitgeber-Steuerungseinrichtung ferner betreibbar ist, die Zeitgeberwiedergewinnung unter Verwendung der empfangenen Daten außer dem empfangenen Zeitgeber-Impuls durchzuführen, die in der ersten Dauer der Kein-Signal-Dauer, die nach den Sendedaten auf dieser Seite folgt, erscheinen.

**15.** System nach Anspruch 1,
dadurch **gekennzeichnet,** daß die Haupt-Sende/Empfangseinheit (70) eine Phasenkomponenten-Extraktionseinrichtung verwendet, welche zusammen mit einem gewöhnlichen Zeitgeber-Wiedergewinnungsschaltkreis der Haupt-Seite betrieben wird, und die Neben-Sende/Empfangseinheit (80) eine Frequenzkomponenten-Extraktionseinrichtung verwendet, welche zusammen mit einem gewöhnlichen Zeitgeber-Extraktionsschaltkreis der Neben-Seite betrieben wird.

**16.** System nach Anspruch 15,
dadurch **gekennzeichnet,** daß die Frequenzkomponenten-Extraktionseinrichtung der Neben-Sende/Empfangseinheit (80) betreibbar ist, die Freguenzkomponente von dem von der Haupt-Sende/Empfangseinheit (70) gelieferten, empfangenen Signal zu extrahieren, um den internen Takt der Neben-Sende/Empfangseinheit (80) in Frequenz und Phase mit dem empfangenen Signal mit Hilfe des Zeitgeber-Wiedergewinnungsschaltkreises der Neben-Seite zu synchronisieren und dann das so synchronisierte Signal als ein Phasenabgleichssignal an die Haupt-Sende/Empfangseinheit zurückzugeben,
die Phasen-Extraktionseinrichtung der Haupt-Sende/Empfangseinheit (70) betreibbar ist, den internen Clock der Haupt-Seite mit dem So gegebenen Phasenabgleichssignal mit Hilfe des Zeitgeber-Wiedergewinnungsschaltkreises der Haupt-Seite nur während der Erzeugung eines Training-Signals in der Haupt-Seite zu synchronisieren, welches zum Auslösen des Zeitgeber-Wiedergewinnungsvorganges jedesmal verwendet wird, wenn die Datenübertragung gestartet werden soll.

**17.** System nach Anspruch 16,
dadurch **gekennzeichnet,** daß in der Haupt-Sende/Empfangseinheit (70) die Phasen-Extraktionseinrichtung und der Zeitgeber-Wiedergewinnungsschaltkreis als ein einziger Schaltkreis gebildet ist, welcher umfaßt: einen ersten Frequenzteiler (130), der betreibbar ist, den Haupt-Takt zu empfangen, und Frequenz-geteilte Ausgangsimpulse zu erzeugen, welche zueinander eine verschiedene Phase haben; einen Wähler (131), welcher betreihbar ist, einen der Ausgangsimpulse in Obereinstimmung mit einem Auswahlsignal vorzusehen, welches von einem zweiten Frequenzteiler (135) geliefert wird; einen Differentiations-Schaltkreis (134), welcher betreibbar ist, eine differentierte Ausgabe auf eine auf diesen gegebene Eingabe hin zu erzeugen; einen Schalter (137), welcher einschaltbar ist, um der auf den Differentiations-Schaltkreis (134) gegebenen Eingabe zu erlauben, unter Steuerung des Training-Signals diesen zu passieren, welche Eingabe das Ausgangssignal ist, welches von einem gewöhnlichen Diskriminator der Haupt-Seite geliefert wird, welcher Diskriminator arbeitet, um logisch "1" und "0" auf das empfangene Signal hin zu erzeugen; ein erstes UND-Gatter (136), welches an seinem ersten Eingang die differenzierte Ausgabe empfängt; ein zweites UND-Gatter (132), welches an seinem ersten Eingang die resultierende Ausgabe von dem ersten UND-Gatter (136) empfängt und an seinem Ausgang den von dem Wähler gewählten Ausgangsimpuls zur Verfügung stellt; und einen dritten Frequenzteiler (133), welcher betreibbar ist, die resultierende Ausgabe von dem zweiten UND-Gatter (132) zu empfangen, um den Frequenz-geteilten Ausgangsimpuls einerseits an einen zweiten Eingang des ersten UND-Gatters (136) zu liefern, welcher andererseits als der haupt-seitige interne Takt verwendet wird.

18. System nach Anspruch 1,
dadurch **gekennzeichnet,** daß die zweite Übertragungs-Steuerungseinrichtung in der Haupt-Sende/Empfangseinheit betrieben werden kann, einen Rahmen-Impuls und Sendedaten sequentiell in dieser Reihenfolge zu übertragen, um jeden Rahmen aufzubauen, während in der Neben-Sende/Empfangseinheit eine Rahmen-Synchronisation unter Verwendung des so übertragenen Rahmen-Impulses durchgeführt wird und dann die Zeitgeber-Steuerungseinrichtung eine Zeitgeber-Wiedergewinnung auch unter Verwendung des so übertragenen Rahmen-Impulses bewirkt, um die so übertragenen Sendedaten als empfangene Daten zu reproduzieren, und zur selben Zeit die zweite Übertragungs-Steuerungseinheit in der Neben-Sende/Empfangseinheit arbeitet, um eine Übertragung eines Sendesignals dieser Seite, welches an die Haupt-Sende/Empfangseinheit gegeben werden soll, nur während eines Empfanges des von der Haupt-Sende/Empfangseinheit gegebenen Rahmen-Impulses zu unterbinden.

19. System nach Anspruch 18,
dadurch **gekennzeichnet,** daß in der empfangenden Sende/Empfangseinheit der Rahmen-Impuls die Rahmen-Synchronisation und die Zeitgeber-Wiedergewinnung durchführt, mittels eines einzelnen Schaltkreises, welcher umfaßt: einen Oberschwellen- und einen Unterschwellen-Komparator (64, 65), welche gemeinsam die Ausgabe eines gewöhnlichen Entzerrers (25) auf dieser Seite empfangen, welcher eine Leitungsentzerrung durchführt; ein ODER-Gatter (66) zum Erzeugen eines ODER-verknüpften Signales bezüglich der beiden verglichenen Ausgaben der Komparatoren; ein Flip-Flop (151), welches betreibbar ist, synchron mit dem internen Takt logisch "1" oder "0" der ODER-verknüpften Ausgabe momentan zu halten; ein Rahmen-Synchronisierschaltkreis (152), welcher betrieben werden kann, ein Rahmen-Impulsdetektionssignal zu erzeugen, und ferner einen Takt-Fenster-Impuls zu erzeugen, welcher auf dem so erzeugten Rahmen-Impuls-Detektionssignal basiert, ein UND-Gatter (67), welches an seinem ersten Eingang den Takt-Fenster-Impuls empfängt und an seinem zweiten Eingang die ODER-verknüpfte Ausgabe, um dem Flanken-Anteil des Rahmen-Impulses zu erlauben, dieses zu passieren; einen Verzögerungsschaltkreis (153), welcher betreibbar ist, die Phase des so durchgelassenen Flankenanteiles zu verschieben, so daß der phasen-verschobene Flankenanteil jede Mittelportion der empfangenen Daten einnehmen kann; und einen digitalen Phasenverriegelungsschaltkreis (D PLL) (68), welcher betreibbar ist, den Ausgangstakt als den internen Takt dieser Seite zu erzeugen, welcher in der Phase von dem phasen-verschobenen Flankenanteil gesteuert wird.

20. System nach Anspruch 6,
dadurch **gekennzeichnet,** daß die zweite Übertragungs-Steuerungseinrichtung in der Haupt-Sende/Empfangseinheit betreibbar ist, einen Rahmen-Impuls und Sendedaten sequentiell in dieser Reihenfolge zu übertragen, um jeden Rahmen aufzubauen, und in der Neben-Sende/Empfangseinheit eine Rahmen-Synchronisation unter Verwendung des so übertragenen Rahmen-Impulses durchgeführt wird, und dann die erste Zeitgeber-Steuerungseinrichtung eine Zeitgeber-Wiedergewinnung auch unter Verwendung des so übertragenen Rahmen-Impulses bewirkt, um die so übertragenen Sendedaten als empfangene Daten zu reproduzieren, und zur selben Zeit die erste Übertragungs-Steuerungseinrichtung der Neben-Sende/Empfangseinheit betreibbar ist, zuerst eine Übertragung des Sendesignals dieser Seite, welches an die Haupt-Sende/Empfangseinheit gegeben werden soll, nur während des Empfanges des Rahmen-Impulses, der von der Haupt-Sende/Empfangseinheit geliefert wird, zu unterbinden, und danach die erste Übertragungs-Steuerungseinrich tung betreibbar ist, eine Übertragung des Sendesignals in der Form eines Rahmen-Impulses und Sendedaten, die sequentiell in dieser Reihenfolge angeordnet sind, zu starten.

21. System nach Anspruch 20, dadurch **gekennzeichnet,** daß in der empfangenden Sende/Empfangseinheit der Rahmen-Impuls die Rahmen-Synchronisation und die Zeitgeber-Wiedergewinnung durchführt, mittels eines einzelnen Schaltkreises, welcher umfaßt: sowohl Unterschwellen- als auch Oberschwellen-Komparatoren (64, 65), welche beide gemeinsam die Ausgabe von einem gewöhnlichen Entzerrer (25) auf dieser Seite empfangen, welcher eine Leitungsentzerrung durchführt; ein ODER-Gatter (66) zum Erzeugen des ODER-verknüpften Signals bezüglich der beiden verglichenen Ausgaben von den Komparatoren; einen Flip-Flop (151), welcher betrieben werden kann, logisch "1" oder "0" der ODER-verknüpften Ausgabe synchron mit dem internen Takt momentan zu halten; einen Rahmen-Synchronisationsschaltkreis (152), welcher betrieben werden kann, ein Rahmen-Impuls-Detektionssignal zu erzeugen, und ferner einen Takt-Fenster-Impuls zu erzeugen, welcher auf dem so erzeugten Rahmen-Impuls-Detektionssignal basiert; ein UND-Gatter (67), welches an seinem ersten Eingang den Takt-Fenster-Impuls empfängt und an seinem zweiten Eingang die ODER-verknüpfte Ausgabe, um dem Flankenanteil des Rahmen-Impulses zu erlauben, dieses zu passieren; einen Verzögerungsschaltkreis (153), welcher betrieben werden kann, die Phase des so durchgelassenen Flankenanteiles zu verschieben, so daß der phasen-verschobene Flankenanteil jede Mittelportion der empfangenen Daten einnehmen kann; und einen digitalen Phasenverriegelungsschaltkreis (D PLL) (68), welcher betreibbar ist, den Ausgangstakt als den internen Takt dieser Seite zu erzeugen, welcher in Phase von dem phasen-verschobenen Flankenanteil gesteuert wird.

# Fig. IA

EP 0 176 098 B1

Fig. IB

Fig. 2A

Se

S_R

Fig. 2B

S_P

Fig. 2C

Fig. 2D

S_R

*Fig. 3*

40

FRAME PULSE GENERATOR 41

TIMING PULSE GENERATOR 42

SD1

FP
TP

SELECTOR 43

SEQUENCE CONTROLLER 44

$S_{S1}$

U-B CONVERTER 45

ECHO SUPPRESION 13

HYB 12

30
TO AND FROM T/R UNIT 50

$S_{R1}$

14

ECHO SUPPRESION

EQUALIZER 15

DISCRIMINATOR 16

RD1

CLOCK DISTRIBUTOR 19

18

## Fig. 4

### 50

EP 0 176 098 B1

Fig. 5A

Fig. 5B

Fig. 5C

Fig. 5D

EP 0 176 098 B1

## Fig. 6

EP 0 176 098 B1

RD 2    Td        FP    TP    RD 2

Fig.7A — (25)

Fig.7B — (61)

Fig.7C — (62)

Fig.7D — (CLOCK WINDOW)

Fig.7E — (66)

Fig.7F — (68)

Fig.7G — (OUTPUT CLOCK)

Fig.7H — (26)

Fig.7I — ISSUE — (FP)

Fig.7J — ISSUE — (SD2)

Fig.7K — ACTIVE — (23)

Fig. 8

70

41 FRAME PULSE GENERATOR — FP

43 SELECTOR

42 TIMING PULSE GENERATOR — TP

SD1

L4

44 SEQUENCE CONTROLLER

$S_{S1}$

45 U-B CONVERTER

12 HYB

30 TO AND FROM T/R UNIT 80

L5

13 ECHO SUPPRESION

76 SYNCHRO-NIZING

74 SEQUENCE CONTROLLER

17 TIMING RECOVERY

RD1

16 DISCRI-MINATOR

15 EQUALIZER

14

$S_{R1}$

19 CLOCK DISTRIBUTOR

18

EP 0 176 098 B1

## Fig. 9

EP 0 176 098 B1

Fig.lOA

Fig.lOB

Fig.lOC

Fig.lOD

EP 0 176 098 B1

EP 0 176 098 B1

# Fig. 11

Fig.12A
Fig.12B
Fig.12C
Fig.12D

PHASE ADJUSTMENT → PHASE LOCK →

EP 0 176 098 B1

# Fig. 13

Fig. 14A

Fig. 14B

Fig. 14C

Fig. 14D

Fig. 14E

Fig. 14F

Fig. 14G

Fig. 14H

Fig. 14I

Fig. 15

41

LOAD REGISTER ~141
0 0 0 0 1

M

CLK 1 → P/S SHIFT REGISTER → FP

142

D FF Q
CLK 2 → CK Q̄
~143

Fig. 16

Fig.17A ............ (25)

FP      RD2

EDGE

Fig.17B ............ (64,65,66)

Fig.17C ............ (152)

Fig.17D ............ (152)

Fig.17E    dt ............ (68)

Fig.17F ............ OUTPUT CLOCK

EP 0 176 098 B1